# EUROPEAN PATENT APPLICATION

(11) **EP 3 506 137 A1**
(43) Date of publication of application: **03.07.2019**
(21) Application number: 18214525.0
(22) Date of filing: 20.12.2018
(51) Int. Cl.: G06F 21/31, H04L 29/06, H04W 12/06

(54) **USER AUTHENTICATION AT AN OFFLINE SECURED OBJECT**

(30) Priority: 28.12.2017 EP 17210785
(71) Applicant: BlueID GmbH, 80807 München (DE)
(72) Inventor: Römer, Kai, 85774 Unterföhring (DE); Spangenberg, Philipp, 81479 München (DE)
(74) Representative: Stellbrink & Partner Patentanwälte mbB

(57) **Abstract**

An authentication method (2) of a user at a secured object (30), based on a comparison of a first user password (748) and a second user password (768) wherein the first user password (748) is transferred from a password server (50) to the secured object (30) via a mobile device (20); and the second password is transferred from the user to the secured object (30) via a mobile device (20) or keypad terminal (60) or a direct entry of the second user password (768) to the secured object (30), further a system (1) configured for user authentication at a secured object (30) comprising a mobile device (20), a secured object (30), a user password entry device and a password server (50) wherein the password server (50) is configured to transfer a first user password (748) to the secured object (30) via the mobile device (20); and the user password entry device is configured to allow the user to enter a second user password (768) and to transfer the second user password to the secured object (30); and the secured object (30) is configured to authenticate the user based on a comparison of the first user password (748) and the second user password (768).

## Description

### Field

The invention relates to a user authentication system and method.

### Introduction

Lots of emerging technologies require user authentication. That is, in order for a user to use a service, he/she may first have to authenticate his/her identity to a secured object - wherein the secured object may offer the service and/or may prevent the user from using the service (e.g. an electronic lock).

Usually user authentication at the secured object can be achieved by using a PIN, password, TAN etc., that can be supplied by a server operated by the service provider. The service provider transmits a PIN to a secured object and to a user. Thus, both the user and the secured object comprise the same PIN. The user can authenticate its identity by entering the PIN that it received from the service provider in the secured object.

However, in such systems a connection between the vehicle and the service provider is required, such that, the service provider can transmit the PIN to the secured object. In other words, the secured object is required to have an internet connection or a connection to a cellular network. On one hand this can increase the power consumed by the secured object - as the secured object is required to stay online in order for it to be able to receive the PIN when sent from the service provider. On the other hand, the fact that the secured object needs to be online can limit the user cases. That is, the secured object needs to be positioned within the coverage area of a cellular network or within the reach of an internet access point.

For example, in a car sharing service, user can unlock a car using a PIN received from the service provider. At the same time, the PIN is transferred to the car too through an online connection between the car and the service provider. Thus, this requires that the car has a working Internet or cellular network connection. This can be disadvantageous, especially when the car can be parked in underground parking places, wherein the network coverage is usually limited - thus causing the car to not be able to receive the PIN. Further, in this example, a car can be located anywhere in a remote place, such as in a valley in the mountains, where network coverage can be weak.

To sum up, the current technology is limited into having the secured object comprise an Internet or cellular network connection. The secured object is usually required to have a connection with a server (i.e. service provider) that provides a PIN for user authentication. This can limit the scenarios or use cases wherein the user authentication can be used.

### Summary

In a first embodiment, the present technology provides a system that can be configured for user authentication at a secured object. The system can comprise a mobile device, a secured object, a user password entry device and a password server. The password server can be configured to transfer a first user password to the secured object via the mobile device. The user password entry device can be configured to allow the user to enter a second user password and to transfer the second user password to the secured object. The secured object can be configured to authenticate the user based on a comparison of the first user password and the second user password.

Thus, the present technology can provide a system that can be configured for password-based user authentication at a secured object. The first user password can be transferred from the password server to the mobile device of the user. Then, to facilitate authentication at the secured object, the first user password can be transferred from the mobile device to the secured object. In other words, the first user password can be transferred from the password server to the secured object via the mobile device. This technique, can avoid the requirement of a connection between the password server and the secured object. Thus, the secured object can be offline - i.e. cannot comprise an internet connection or a connection to a cellular network. Hence, wherein otherwise an Internet or cellular network connection can be required for an exchange of data between the password server (or a service provider) and the secured object, current system can be configured for a user authentication even if the secured object can be offline.

The system can further comprise a user password entry device which can allow a user to enter a second password. The user password entry device can transmit the second user password to the secured object. The connection between the user password entry device and the secured object can be an offline connection, such as, a short-distance, bidirectional communication, such as, NFC or Bluetooth® or similar networks. Put it differently, current system can allow for the secured object and user password entry device to communicate even if the secured object can be offline, i.e. cannot have an internet connection or cellular network connection.

Thus, a first user password and a second user password can be transferred to the secured object. The secured object can compare the first user password and the second user password and can authenticate the user if the passwords match.

The user password entry device can be the mobile device, such as a smartphone. The user password entry device can be a keypad terminal, for example, a keypad that can comprise an NFC and/or Bluetooth connection. The user password entry device can also be a user interface on the secured object, e.g. a keypad embedded on the secured object.

In some system embodiments, the mobile device can be a smartphone, tablet, laptop, pocket computer, cellphone or NFC card. The mobile device can comprise a user interface. The user interface can be advantageous as it can allow the user to control the mobile device, more particularly, it can allow the user to receive and/or send a message (e.g. a user password) or enter a message (e.g. a user password, such as the second user password). Further, the mobile device can comprise a mobile device identity. The mobile device identity can be advantageous for unambiguously identifying the mobile device and for facilitating the scalability of the system. That is, multiple mobile devices can be comprised by the system and can be identified. In addition, the mobile device can comprise a cryptographic identity, such as at least one cryptographic key, preferably a pair of cryptographic keys, such as public key and a private key. The public-private pair of keys can be advantageous for the use of an asymmetric encryption scheme. This can allow for a secure data communication between entities of the system.

In some system embodiments, the secured object can allow or prohibit a user from using and/or accessing a product or service. The secured object can be configured to execute a command. For example, the secured object can execute a command or allow a user to use a service, if successful authentication of the user is done. The secured object can be an electronic lock, a vehicle, a vehicle comprising an electronic lock, the electronic lock of the vehicle. The secured object can be the start/stop controller of the engine of the vehicle. Thus, the secured object, in such embodiments, can allow a user to lock and/or unlock a vehicle and/or start and/or stop the engine of the vehicle after successful user authentication.

In some system embodiments, the secured object can comprise a secured object identity. The secured object identity can be advantageous for unambiguously identifying the secured object and for facilitating the scalability of the system. That is, multiple secured objects can be comprised by the system and can be identified. In addition, the secured object can comprise a cryptographic identity, such as at least one cryptographic key, preferably a pair of cryptographic keys, such as public key and a private key. The public-private pair of keys can be advantageous for the use of an asymmetric encryption scheme. This can allow for a secure data communication between the secured object and other entities of the system.

In some system embodiments, password server can comprise a password server identity. The password server identity can be advantageous for unambiguously identifying the password servers and for facilitating the scalability of the system. That is, multiple password server can be comprised by the system and can be identified. In addition, the password server can comprise a cryptographic identity, such as at least one cryptographic key, preferably a pair of cryptographic keys, such as public key and a private key. The public-private pair of keys can be advantageous for the use of an asymmetric encryption scheme. This can allow for a secure data communication between the password server and other entities of the system.

In some system embodiments, the password server can be a server configured to comprise and/or generate at least one password (i.e. a first user password) for at least one user of the system. The password server can be a server that can be operated by a service provider. For an increased security, it can be advantageous that the password server can store the user passwords in a secure manner. Thus, the user passwords (e.g. the first user password) can be hashed, salted and/or peppered before being stored in the password server. This can increase security, as even if the hashed, slated and/or peppered version of the password can be obtained by a non-intended party, then it can still be difficult for them to obtain the original password.

In some system embodiments, the system can comprise a trust center. The trust center can be advantageous as it can facilitate the secure exchange of data between the system components, such as between the password server and the mobile device and/or between the mobile device and the secured object and/or between the user password entry device and the secured object. The trust center can be configured to generate and/or to store the encryption identities of the password server, mobile device, user password entry device and the secured object. The trust center can provide a trusted public key database for asymmetric cryptography.

In some system embodiments, the trust center can store the public keys of the secured objects of the system and can be configured to provide them to the system components, such as, to the password server, to the mobile device and/or to the password entry device. In one aspect of the invention, the trust center can store at least one data structure for each (or at least some of the) secured objects of the system. The data structures can comprise a secured object identity and the secured object public key. Thus, the trust center can identify a secured object based on the secured object identity it can store. This can facilitate the providing of secured object public key to other system components - i.e. they may request the secured object public key by providing to the trust center the secured object public identity of the secured object the public key of which they can request.

In some system embodiments, the trust center can comprise a trust center identity. The trust center identity can be advantageous for unambiguously identifying the trust center and for facilitating the scalability of the system. That is, multiple trust centers can be comprised by the system and can be identified. In addition, the trust center can comprise a cryptographic identity, such as at least one cryptographic key, preferably a pair of cryptographic keys, such as public key and a private key. The public-private pair of keys can be advantageous for the use of an asymmetric encryption scheme. This can allow for a secure data communication between the trust center and other entities of the system.

In some system embodiments, the mobile device can be configured to send a password request message to the password server. That is, the user can use the mobile device to request a user password, e.g. the first user password, from the password server. The mobile device can request the first user password before the password server can transfer the first user password to the mobile device.

That is, in some embodiments, the password server can send the first user password to the mobile device. This can be done without any indication or request from the user or the mobile device. Alternatively, in some other embodiments, the password server can send the first user password to the mobile device after the password server can be indicated or can receive a request from the user or the mobile device of the user. For example, the password server can provide the first user password to the mobile device as a reply to a user request (or mobile device request). In another aspect, the mobile device (or the user controlling the mobile device) can send the password request message to the password server and the password server can provide to the mobile device a first user password that can be used by user (and/or the mobile device) for multiple authentication procedures at the secured object.

In some system embodiments, the password request message (i.e. the user password request from the user and/or the mobile device) can comprise a secured object identity. The secured object identity can be advantageous as it can allow the mobile device (and/or the user) to specify the secured object that user can require to authenticate to. In some system embodiments, the password request message can comprise password request message identity and mobile device identity. The respective identities can facilitate the identification of the message (or packet) comprising that identity and of the mobile device comprising that identity.

In some embodiments the mobile device can encrypt the password request message before sending it to the password server. The encryption of the password request message can facilitate the maintenance of the secrecy of the data - i.e. a non-intended entity cannot access the data comprised in the encrypted password request message, even if the non-intended party such as an eavesdropper can obtain the encrypted password request message. The mobile device can encrypt the password request message using a public key of the password server through an asymmetric encryption scheme. Thus, the encrypted password request message can be decrypted only by the private key of the password server (this feature attributes to the asymmetric encryption schemes). In other words, the secrecy of the password request message can be obtained by encrypting the packet with the public key of the password server, since only the password server can comprise the private key of the password server. Note that the password server can securely store its private key and in order to maintain the secrecy of the data the password server can comprise its private key secret (i.e. only the password server can comprise the private key of the password server).

The mobile device can further encrypt the data to facilitate a verification by the password server that the received password request message came from the mobile device. In this aspect, the mobile device can encrypt the password request message using the mobile device private key through an asymmetric encryption scheme. As long as the private key of the mobile device is not corrupted or obtained by another party, the password server can ensure that the packet came from the mobile device if it can decrypt the encrypted password request message by using the mobile device public key. Alternatively, or additionally, the mobile device can create a digital signature using its private key and the password request message. Thus, by verifying the digital signature of the password request message, the password server can verify that the password request message was sent from the mobile device and that the data of the password request message were not corrupted (i.e. changed) during the transmission from the mobile device to the password server.

A digital signature (in cryptography) can be a mathematical scheme for demonstrating the authenticity of digital messages or documents. A valid digital signature gives a recipient reason to believe that the message was created by a known sender and that the message was not altered in during the communication.

In some embodiments, the Diffie-Hellman (DH) protocol or the Elliptic-Curve Diffie-Hellman (ECDH) protocol can used to transfer the password request message from the mobile device to the password server. Said protocols can be advantageous as they can provide a secure manner for the mobile device and the password server to exchange their public keys and/or to agree on a shared secret (i.e. shared encryption key that can be used for encryption) and/or to encrypt the data.

In some embodiments, the password server can generate a first password message and can transmit the first password message to the mobile device. The first password message can comprise the first user password.

The password server can receive a password request message from the mobile device and can generate a first password message that can comprise the first user password and can send this message to the mobile device. In another aspect, the password server can receive a command (generated by a password server operator or at the expiration of an internal timer or by another process or program running at the password server) that indicates to the password server to generate a first password message and to send it to the mobile device (with a respective mobile device identity).

In some embodiments - to facilitate the identification of the first password message and/or the identification of the mobile device and/or the identification of the secured object wherein the user authentication can take place - the first password message can comprise first password message identity and/or mobile device identity and/or secured object identity. Further, it can be advantageous to include a validity date to the first password message. The validity data can specify the time period that the first password message can be valid. Thus, a user can use the respective first password message as long as the validity date has not expired.

In some embodiments the password server can encrypt the first password message before sending it to the mobile device. The encryption of the first password message can facilitate the maintenance of the secrecy of the data - i.e. a non-intended entity cannot access the data comprised in the encrypted first password message, even if the non-intended party such as an eavesdropper can obtain the encrypted first password message. The password server can encrypt the first password message using a public key of the secured object through an asymmetric encryption scheme. Thus, the encrypted first password message can be decrypted only by the private key of the secured object. In other words, the secrecy of the first password message can be obtained by encrypting the packet with the public key of the secured object, since only the secured object can comprise the private key of the secured object. Note that the secured object can securely store its private key and in order to maintain the secrecy of the data the secured object can comprise its private key secret (i.e. only the secured object can comprise the private key of the secured object).

As discussed, the system can comprise a trust center that can provide a trusted public key database for asymmetric cryptography identity. In some embodiments, the password server can be configured to obtain the secured object public key, that the password server can use for the encryption of the first password message, from the trust center.

The password server can further encrypt the data to facilitate a verification by the mobile device and/or the secure object that the received first password message came from the password server. In this aspect, the password server can encrypt the first password message using the password server private key through an asymmetric encryption scheme. As long as the private key of the password server is not corrupted or obtained by another party, the mobile device can ensure that the packet came from the password server if it can decrypt the encrypted first password message by using the password server public key. Alternatively, or additionally, the password server can create a digital signature using its private key and the first password message. Thus, by verifying the digital signature of the first password message, the mobile device can ensure that the first password message was sent from the password server and that the data of the first password message were not corrupted (i.e. changed) during the transmission from the password server to the mobile device.

In some embodiments, the Diffie-Hellman (DH) protocol or the Elliptic-Curve Diffie-Hellman (ECDH) protocol can be used to transfer the first password message from the password server to the mobile device. Said protocols can be advantageous as they can provide a secure manner for the password server and the mobile device to exchange their public keys and/or to agree on a shared secret (i.e. shared encryption key that can be used for encryption) and/or to encrypt the data.

In some embodiments, the mobile device can transmit the first password message to the secure object. That is, the mobile device can receive a first password message that can comprise the first user password from the password server. To facilitate the user authentication at the secured object the mobile device can send the first password message to the secured object. As discussed, the password server can encrypt the first password message with the public key of the secured object, hence, the secured object can be able to decrypt the encrypted first password message.

In some embodiments, the user can enter the second user password on the mobile device. That is, in such embodiments, the mobile device can comprise the user password entry device. Furthermore, the mobile device can send the second user password to the secured object. In some embodiments, the mobile device can send a second password message to the secured object, wherein the second password message can comprise the second user password. In addition, the second password message can comprise second password message identity, mobile device identity and secured object identity.

In some embodiments the mobile device can encrypt the second password message before sending it to the secured object. The encryption of the second password message can facilitate the maintenance of the secrecy of the data - i.e. a non-intended entity cannot access the data comprised in the encrypted second password message, even if the non-intended party such as an eavesdropper can obtain the encrypted second password message. The mobile device can encrypt the second password message using a public key of the secured object through an asymmetric encryption scheme. Thus, the encrypted second password message can be decrypted only by the private key of the secured object. In other words, the secrecy of the second password message can be obtained by encrypting the packet with the public key of the secured object, since only the secured object can comprise the private key of the secured object. Note that the secured object can securely store its private key and in order to maintain the secrecy of the data the secured object can comprise its private key secret (i.e. only the secured object can comprise the private key of the secured object).

In some embodiments, the mobile device can generate a pair of temporary encryption keys. That is, the mobile device can generate a temporary public key and a temporary private key. The mobile device can transmit the temporary public key to the secured object. The mobile device can encrypt the second password message with the temporary private key that the mobile device previously generated. Then, the mobile device can delete the private key. On the other hand, the secured object can decrypt the second password message using the temporary public key (which the mobile device generated and transmitted to the secured object) and can delete the temporary public key. The use of the temporary private-public keys for the encryption of the second password message and the deletion of them after the communication of the data, can be advantageous as it can provide forward secrecy. That is, even if the private key of the mobile device and/or the private key of the secured object are obtained by another party, the past session communication cannot be decrypted since temporary (different) keys were used for each session of communication.

The mobile device can further encrypt the data of the second password message to facilitate a verification by the secured object that the received second password message came from the mobile device. In this aspect, the mobile device can encrypt the second password message using the mobile device private key through an asymmetric encryption scheme. As long as the private key of the mobile device is not corrupted or obtained by another party, the secured object can verify that the packet came from the mobile device if it can decrypt the encrypted second password message by using the mobile device public key. Alternatively, or additionally, the mobile device can create a digital signature using its private key and the second password message. Thus, by verifying the digital signature of the second password message, the secured object can verify that the second password message was sent from the mobile device and that the data of the second password message were not corrupted (i.e. changed) during the transmission from the mobile device to the secured object.

In some embodiments, the Diffie-Hellman (DH) protocol or the Elliptic-Curve Diffie-Hellman (ECDH) protocol can be used to transfer the second password message from the mobile device to the secured object. Said protocols can be advantageous as they can provide a secure manner for the mobile device and the secured object to exchange their public keys and/or to agree on a shared secret (i.e. shared encryption key that can be used for encryption) and/or to encrypt the data.

In some embodiments, at least one nonce can be transmitted between the mobile device and the secured object. For example, the mobile device can generate a nonce (e.g. a random number) and can transmit it to the secured object. Similarly, the secured object can generate a nonce (e.g. a random number) and can transmit it to the mobile device. The mobile device can use the at least one nonce, preferably both of them, during the encryption of the second password message. For example, the mobile device can add the at least one nonce to the data of the second password message before (or after or while) encrypting the data and can send the second password message to the secured object. The secured object can decrypt the second password message and can verify if the nonce (or nonces) comprised in the second password message is the same with the nonce (or nonces) it comprises. The use of the nonces can be advantageous as it can protect the communication between the mobile device and the secured object from replay attacks.

In some embodiments, the system can comprise a keypad terminal. The keypad terminal can facilitate the entering of the second user password by the user.

In some embodiments, the user can enter the second user password on the keypad terminal. That is, in such embodiments, the keypad terminal can comprise the user password entry device. Furthermore, the keypad terminal can send the second user password to the secured object.

In some embodiments the keypad terminal can encrypt the second user password before sending it to the secured object. The encryption of the second user password can facilitate the maintenance of the secrecy of the data - i.e. a non-intended entity cannot access the data comprised in the encrypted second user password, even if the non-intended party such as an eavesdropper can obtain the encrypted second user password. The keypad terminal can encrypt the second user password using a public key of the secured object through an asymmetric encryption scheme. Thus, the encrypted second user password can be decrypted only by the private key of the secured object. In other words, the secrecy of the second user password can be obtained by encrypting the packet with the public key of the secured object, since only the secured object can comprise the private key of the secured object. Note that the secured object can securely store its private key and in order to maintain the secrecy of the data the secured object can comprise its private key secret (i.e. only the secured object can comprise the private key of the secured object).

In some embodiments, the keypad terminal can generate a pair of temporary encryption keys. That is, the keypad terminal can generate a temporary public key and a temporary private key. The keypad terminal can transmit the temporary public key to the secured object. The keypad terminal can encrypt the second user password with the temporary private key that the keypad terminal previously generated. Then, the keypad terminal can delete the private key. On the other hand, the secured object can decrypt the second user password using the temporary public key (which the keypad terminal generated and transmitted to the secured object) and can delete the temporary public key. The use of the temporary private-public keys for the encryption of the second user password and the deletion of them after the communication of the data, can be advantageous as it can provide forward secrecy. That is, even if the private key of the keypad terminal and/or the private key of the secured object are obtained by another party, the past session communication cannot be decrypted since temporary (different) keys were used for each session of communication.

The keypad terminal can further encrypt the data of the second user password to facilitate a verification by the secured object that the received second user password came from the keypad terminal. In this aspect, the keypad terminal can encrypt the second user password using the keypad terminal private key through an asymmetric encryption scheme. As long as the private key of the keypad terminal is not corrupted or obtained by another party, the secured object can verify that the packet came from the keypad terminal if it can decrypt the encrypted second user password by using the keypad terminal public key. Alternatively, or additionally, the keypad terminal can create a digital signature using its private key and the second user password. Thus, by verifying the digital signature of the second user password, the secured object can verify that the second user password was sent from the keypad terminal and that the data of the second user password were not corrupted (i.e. changed) during the transmission from the keypad terminal to the secured object.

In some embodiments, the Diffie-Hellman (DH) protocol or the Elliptic-Curve Diffie-Hellman (ECDH) protocol can be used to transfer the second password message from the keypad terminal to the secured object. Said protocols can be advantageous as they can provide a secure manner for the keypad terminal and the secured object to exchange their public keys and/or to agree on a shared secret (i.e. shared encryption key that can be used for encryption) and/or to encrypt the data.

In some embodiments, at least one nonce can be transmitted between the keypad terminal and the secured object. For example, the keypad terminal can generate a nonce (e.g. a random number) and can transmit it to the secured object. Similarly, the secured object can generate a nonce (e.g. a random number) and can transmit it to the keypad terminal. The keypad terminal can use the at least one nonce, preferably both of them, during the encryption of the second user message. For example, the keypad terminal can add the at least one nonce to the data of the second user password before (or after or while) encrypting the data and can send the second user password to the secured object. The secured object can decrypt the second user password and can verify if the nonce (or nonces) comprised in the second user password is the same with the nonce (or nonces) it comprises. The use of the nonces can be advantageous as it can protect the communication between the keypad terminal and the secured object from replay attacks.

In some embodiments, the secured object can comprise a user interface. The user interface of the secured object can be configured to allow the user to enter a user password, such as the second user password. That is, in such embodiments, the user interface of the secured object can comprise the user password entry device. To put it simply, in such embodiments, the user can enter the second user password directly to the secured object.

Thus, the secured object can receive the first user password and the second user password. For security reasons, the first and the second user password can be encrypted before being sent to the secured object. That is, the secured object can receive encrypted versions of the first and the second user password. However, the secured object can be configured to decrypt the first and the second user password. That is, the first password message can be decrypted using the public key of the password server and/or the private key of the secured object - wherein the first password message was encrypted by the password server using the public key of the secured object and/or the private key of the password server. The second user password can be decrypted using the public key of the mobile device and/or the private key of the secured object and/or a temporary public key generated by the mobile device and transmitted to the secured object - wherein the secured object can receive the second user password from the mobile device and the mobile device can encrypt the second user password using the public key of the secured object and/or the private key of the mobile device and/or a temporary generated private key. The second user password can be decrypted using the public key of keypad terminal and/or the private key of the secured object and/or a temporary public key generated by the keypad terminal and transmitted to the secured object- wherein the secured object can receive the second user password from the keypad terminal and the keypad terminal can encrypt the second user password using the public key of the secured object and/or the private key of the keypad terminal and/or a temporary generated private key. In embodiments wherein the second user password is entered directly on the secured object a decryption of the second user password may not be necessary, as the packet may not be encrypted.

The secured object can verify the authenticity of the user by comparing the first user password and the second user password. If the secured object can verify that the user is who he/she claims to be (i.e. the authentication is successful) then the secured object can execute a command such as: an unlock command or a lock command. Further, the secured object can allow the user to use a service of the secured object if the user can be successfully authenticated.

In a second embodiment, an authentication method of a user at a secured object, based on a comparison of a first user password and a second user password is disclosed, wherein the first user password is transferred from a password server to the secured object via a mobile device and the second user password is transferred from the user to the secured object via a mobile device or keypad terminal or a direct entry of the second user password to the secured object.

That is a mobile device, a secured object and password server can be provided. The method of the second embodiment can be configured for a user authentication at the secured object. The authentication of the user can be done by comparing a first user password and a second user password at the secured object. The first user password can be transferred from the password server to the mobile device and from the mobile device to the secured object. In some instances, the second user password can be entered on the mobile device and can be transferred to the secured object by the mobile device. In some other instances, the second user password can be entered by the user on a keypad terminal and can be transferred from the keypad terminal to the secured object. In yet some other aspects, the second user password can be entered by the user on a user interface of the secured object and thus the secured object can directly obtain the second user password.

In some method embodiments, the mobile device can request a first user password from the password server.

In some method embodiments, a trust center can be further provided. The trust center can provide a trusted public key database for asymmetric encryption, such as a secured object public key.

In some method embodiments, the password server can request a secured object public key from the trust center. The request can comprise a secured object identity. The secured object identity can allow the password server to specify the public key of which secured object the password server is requiring. This can particularly be advantageous if multiple secured object can be provided. The trust center can reply to the password server's request by providing the secured object public key to the password server.

In some method embodiments, the password server can comprise at least one user password, such as, the first user password, for at least one user. The password server can transmit the first user password to the mobile device. This can be advantageous as it can facilitate the transmission of the first user password to the secured object (particularly if there can be no connection between the secured object and the password server, e.g. the secured object can be offline).

In some method embodiments, the password server can encrypt the first user password using the public key of the secured object through an asymmetric encryption scheme. This can be advantageous as it can ensure the secrecy of the first user password - as only the secured object, that can have the respective secured object private key, can decrypt the first user password.

In addition, the password server can encrypt and/or sign the first user password using a password server private key. This can be advantageous as it can allow a recipient (such as the mobile device and/or the secured object) of the first user password encrypted and/or singed to verify if the first user password came from the password server and/or if the data were not corrupted.

The mobile device can store the first user password that it received from the password server. This can be advantageous as it can allow the mobile device to use the first user password encrypted packet(s) that it received from the password server, to be used at a later moment in time. It can also allow the mobile device to use the first user password encrypted packet(s) for multiple authentication procedures at a secured object.

In some embodiments, the user can enter the second user password on the mobile device. The mobile device can encrypt the second user password using a secured object public key through an asymmetric encryption scheme. The mobile device can receive the secured object public key through an initialization of the connection between the secured object and the mobile device - wherein the secured object and the mobile device can exchange the respective public keys. The mobile device can encrypt and/or sign the second user password using a mobile device private key. This can allow the secured object to verify if the second user password was sent from the mobile device and/or if the data were corrupted or not.

In some embodiments, the mobile device can generate a temporary private key and a temporary public key. The mobile device can transmit the temporary public key to the secured object. The mobile device can encrypt the second user password using the temporary private key. This can provide forward secrecy. That is, even if the private key of the mobile device and/or the private key of the secured object are obtained by another party, the past session communication cannot be decrypted since temporary (different) keys were used for each session of communication.

In some method embodiments, at least one nonce can be transmitted between the mobile device and the secured object. For example, the mobile device can generate a nonce (e.g. a random number) and can transmit it to the secured object. Similarly, the secured object can generate a nonce (e.g. a random number) and can transmit it to the mobile device. The mobile device can use the at least one nonce, preferably both of them, during the encryption of the second password message. For example, the mobile device can add the at least one nonce to the data of the second password message before (or after or while) encrypting the data and can send the second password message to the secured object. The secured object can decrypt the second password message and can verify if the nonce (or nonces) comprised in the second password message is the same with the nonce (or nonces) it can comprise. The use of the nonces can be advantageous as it can protect the communication between the mobile device and the secured object from replay attacks.

In some embodiments, the user can enter the second user password on the keypad terminal. The keypad terminal can encrypt the second user password using a secured object public key through an asymmetric encryption scheme. The keypad terminal can receive the secured object public key through an initialization of the connection between the secured object and the keypad terminal - wherein the secured object and the keypad terminal can exchange the respective public keys. The keypad terminal can encrypt and /or sign the second user password using a keypad terminal private key. This can allow the secured object to verify if the second user password was sent from the keypad terminal and/or if the data were corrupted or not.

In some embodiments, the keypad terminal can generate a temporary private key and a temporary public key. The keypad terminal can transmit the temporary public key to the secured object. The keypad terminal can encrypt the second user password using the temporary private key. This can provide forward secrecy. That is, even if the private key of the keypad terminal and/or the private key of the secured object are obtained by another party, the past session communication cannot be decrypted since temporary (different) keys were used for each session of communication.

In some method embodiments, at least one nonce can be transmitted between the keypad terminal and the secured object. For example, the keypad terminal can generate a nonce (e.g. a random number) and can transmit it to the secured object. Similarly, the secured object can generate a nonce (e.g. a random number) and can transmit it to the keypad terminal. The keypad terminal can use the at least one nonce, preferably both of them, during the encryption of the second password message. For example, the keypad terminal can add the at least one nonce to the data of the second password message before (or after or while) encrypting the data and can send the second password message to the secured object. The secured object can decrypt the second password message and can verify if the nonce (or nonces) comprised in the second password message is the same with the nonce (or nonces) it comprises. The use of the nonces can be advantageous as it can protect the communication between the keypad terminal and the secured object from replay attacks.

In some embodiments, the secured object can comprise a user interface. The user interface of the secured object can be configured to allow the user to enter a user password, such as the second user password. That is, in such embodiments, the user interface of the secured object can comprise the user password entry device. To put it simply, in such embodiments, the user can enter the second user password directly to the secured object. Thus, the secured object can receive the first user password and the second user password. For security reasons, the first and the second user password can be encrypted before being sent to the secured object. That is, the secured object can receive encrypted versions of the first and the second user password. However, the secured object can be configured to decrypt the first and the second user password. That is, the first password message can be decrypted using the public key of the password server and/or the private key of the secured object - wherein the first password message was encrypted by the password server using the public key of the secured object and/or the private key of the password server. The second user password can be decrypted using the public key of the mobile device and/or the private key of the secured object and/or a temporary public key generated by the mobile device and transmitted to the secured object - wherein the secured object can receive the second user password from the mobile device and the mobile device can encrypt the second user password using the public key of the secured object and/or the private key of the mobile device and/or a temporary generated private key. The second user password can be decrypted using the public key of keypad terminal and/or the private key of the secured object and/or a temporary public key generated by the keypad terminal and transmitted to the secured object- wherein the secured object can receive the second user password from the keypad terminal and the keypad terminal can encrypt the second user password using the public key of the secured object and/or the private key of the keypad terminal and/or a temporary generated private key. In embodiments wherein the second user password is entered directly on the secured object a decryption of the second user password may not be necessary, as the packet may not be encrypted.

The secured object can verify the authenticity of the user by comparing the first user password and the second user password. If the secured object can verify that the user is who he/she claims to be (i.e. the authentication is successful) then the secured object can execute a command such as: an unlock command or a lock command. Further, the secured object can allow the user to use a service of the secured object if the user can be successfully authenticated.

In a third embodiment the use of the system according to any of the system embodiments and/or the authentication method according to any of the preceding method embodiments in a car sharing service is disclosed.

In a forth embodiment the use of the system according to any of the system embodiments and/or the authentication method according to any of the preceding method embodiments in a bike sharing service is disclosed.

In a fifth embodiment the use of the system according to any of the system embodiments and/or the authentication method according to any of the preceding method embodiments in an apartment sharing service is disclosed.

The present invention is also defined by the following numbered embodiments.

Below, system embodiments will be discussed. These embodiments are identified by the letter S followed by a number. When reference is herein made to system embodiments, these embodiments are meant.
S1. A system (1) configured for user authentication at a secured object (30) comprising:
   a mobile device (20), a secured object (30), a user password entry device and a password server (50); and wherein
   the password server (50) is configured to transfer a first user password (748) to the secured object (30) via the mobile device (20); and
   the user password entry device is configured to allow the user to enter a second user password (768) and to transfer the second user password to the secured object (30); and
   the secured object (30) is configured to authenticate the user based on a comparison of the first user password (748) and the second user password (768).

### Mobile Device

S2. A system (1) according to the preceding system embodiment, wherein the mobile device (20) is a smartphone, laptop, tablet, cellphone or NFC card.
S3. A system (1) according to any of the preceding system embodiments, wherein the mobile device (20) comprises a user interface (21).
S4. A system (1) according to any of the preceding system embodiments, wherein the mobile device (20) comprises a mobile device identity (22).
S5. A system (1) according to any of the preceding system embodiments, wherein the mobile device (20) is configured to comprise at least one cryptographic key, preferably a pair of cryptographic keys, such as, a mobile device public key (24) and a mobile device private key (26).

### Secured object

S6. A system (1) according to any of the preceding system embodiments, wherein the secured object (30) is configured for providing a service.
S7. A system (1) according to any of the preceding system embodiments, wherein the secured object (30) is configured to execute a command.
S8. A system (1) according to any of the preceding system embodiments, wherein the secured object (30) is an electronic lock.
S9. A system (1) according to any of the preceding system embodiments, wherein the secured object (30) is a vehicle, an electronic lock in the vehicle and/or a vehicle engine start/stop controller.
S10. A system (1) according to any of the preceding system embodiments, wherein the secured object (30) comprises a secured object identity (32).
S11. A system (1) according to any of the preceding system embodiments, wherein the secured object (30) comprises at least one cryptographic key, preferably a pair of cryptographic keys, such as, a secured object public key (34) and a secured object private key (36).

### Password server

S12. A system (1) according to any of the preceding system embodiments, wherein the password server (50) is configured to comprise a password server identity (52).
S13. A system (1) according to any of the preceding system embodiments, wherein the password server (50) is configured to comprise at least one cryptographic key, preferably a pair of cryptographic keys, such as, a password server public key (54) and a password server private key (56).
S14. A system (1) according to any of the preceding system embodiments, wherein the password server (50) is configured to store at least one user password of at least one user.
S15. A system (1) according to the preceding system embodiments, wherein the user password is stored in a secured manner, such as, by hashing, salting and/or peppering the user password before storing it.

### Trust Center

S16. A system (1) according to any of the preceding system embodiments, wherein the system (1) further comprises a trust center (40).
S17. A system (1) according to the preceding system embodiment, wherein the trust center (40) is configured to provide a trusted public key database for asymmetric cryptography.
S18. A system (1) according to any of the preceding system embodiments and with the features of embodiments S11 and S16, wherein the trust center (40) comprises a database of public keys (34) of at least one secured object (30).
S19. A system (1) according to any of the preceding system embodiments and with the features of embodiments S11, S10 and S16, wherein the trust center (40) is configured to store at least one data-structure (41) for each secured object (30) comprising a secured object public key (34) and the respective secured object identity (32) of the secured object (30).
S20. A system (1) according to the preceding system embodiment, wherein the trust center (40) is configured to provide a secured object public key (34) based on a request comprising a secured object identity (32) wherein the secured object public key (34) and the secured object identity (32) belong to a secured object (30).
S21. A system (1) according to any of the preceding system embodiments and with the features of embodiment S16, wherein the trust center (40) is configured to comprise a trust center identity (42).
S22. A system (1) according to any of the preceding system embodiments and with the features of embodiment S16, wherein the trust center (40) is configured to comprise at least one cryptographic key, preferably a pair of cryptographic keys, such as a trusted center public key (44) and a trusted center private key (46).

### Password Request

S23. A system (1) according to any of the preceding system embodiments, wherein the mobile device (20) is configured to send a password request message (72) to the password server (50).
S24. A system (1) according to the preceding system embodiment, wherein the password request message (72) comprises secured object identity (724).
S25. A system according to any of the preceding system embodiments and with the features of embodiment S23, wherein the password request message (72) comprises at least one of: a password request message identity (721) and a mobile device identity (722)
S26. A system (1) according to any of the preceding system embodiments and with the features of embodiments S13 and S23, wherein the mobile device (20) encrypts the password request message (72) using a password server public key (54) through an asymmetric encryption scheme, such that, it can only be decrypted using a respective password server private key (56).
S27. A system (1) according to any of the preceding system embodiments and with the features of embodiments S5 and S23, wherein the mobile device (20) encrypts the password request message (72) using a mobile device private key (26) through an asymmetric encryption scheme, such that, it can only be decrypted using a respective mobile device public key (24).
S28. A system (1) according to any of the preceding system embodiments and with the features of embodiment S23, wherein the Diffie-Hellman (DH) protocol or the Elliptic-Curve Diffie-Hellman (ECDH) protocol is used to transfer the password request message (72) from the mobile device (20) to the password server (50).

### First Password Message

S29. A system (1) according to any of the preceding system embodiments, wherein the password server (50) generates a first password message (74) and transmits it to the mobile device (20).
S30. A system (1) according to the preceding system embodiment, wherein the first password message (74) comprises the first user password (748).
S31. A system (1) according to any of the preceding system embodiments and with the features of embodiment S29, wherein the first password message (74) comprises at least one of: a first password message identity (741), a mobile device identity (742), a secured object identity (744), and a validity date (743).
S32. A system (1) according to any of the preceding system embodiments and with the features of embodiments S11 and S29, wherein password server (50) is configured to encrypt the first password message (74) using a secured object public key (34) through an asymmetric encryption scheme, such that, it can only be decrypted using a respective secured object private key (36).
S33. A system (1) according to the preceding embodiment and with the features of embodiments S16, wherein the password server (50) is configured to obtain the secured object public key (32) from the trust center (50).
S34. A system (1) according to any of the preceding system embodiments and with the features of embodiments S13 and S29, wherein password server (50) is configured to encrypt the first password message (74) using a password server private key (56) through an asymmetric encryption scheme, such that, it can only be decrypted using a respective password server public key (54).
S35. A system (1) according to any of the preceding system embodiments and with the features of embodiment S29, wherein the Diffie-Hellman (DH) protocol or the Elliptic-Curve Diffie-Hellman (ECDH) protocol is used to transfer the first password message (74) from the password server (50) to the mobile device (20).
S36. A system (1) according to any of the preceding system embodiments and with the features of embodiment S29, wherein the mobile device (20) transmits the first password message (74) to the secured object (30).

### Second Password Message

S37. A system (1) according to any of the preceding system embodiments, wherein the system is configured to allow the user to facilitate authentication at the secured object (30) by entering the second user password (768) on the mobile device (20), wherein the mobile device (20) comprises the user password entry device.
S38. A system (1) according to any of the preceding system embodiments, wherein the mobile device (20) is configured to send a second password message (76) to the secured object (30).
S39. A system (1) according to the preceding system embodiment, wherein the second password message (76) comprises the second user password (768).
S40. A system (1) according to any of the preceding system embodiments and with the features of embodiment S38, wherein the second password message (76) comprises at least one of: second password message identity (761), mobile device identity (762) and secured object identity (764).
S41. A system (1) according to any of the preceding system embodiments and with the features of embodiments S11 and S38, wherein the mobile device (20) is configured to encrypt the second password message (76) using a secured object public key (34) through an asymmetric encryption scheme, such that, it can only be decrypted using a respective secured object private key (36).
S42. A system (1) according to any of the preceding system embodiments and with the features of embodiment S38, wherein the mobile device (20) is configured to generate temporary private key (536) and a temporary public key (534) and transmits the temporary public key (534) to the secured object (30).
S43. A system (1) according to the preceding system embodiment, wherein mobile device (20) is configured to encrypt the second password message (76) with the temporary private key (536) through an asymmetric encryption scheme, such that, it can only be decrypted using the respective temporary public key (534).
S44. A system (1) according to any of the preceding system embodiments and with the features of embodiments S5 and S38, wherein mobile device (20) is configured to encrypt the second password message (76) with a mobile device private key (26) through an asymmetric encryption scheme, such that, it can only be decrypted using a mobile device public key (24).
S45. A system (1) according to any of the preceding system embodiments and with the features of embodiment S38, wherein the Diffie-Hellman (DH) protocol or the Elliptic-Curve Diffie-Hellman (ECDH) protocol is used to transfer the second password message (76) from the mobile device (20) to the secured object (30).
S46. A system (1) according to any of the preceding system embodiments and with the features of embodiment S38, wherein at least one nonce is transmitted between the mobile device (20) and the secured object (30).
S47. A system (1) according to the preceding system embodiment, wherein the at least one nonce transmitted between the mobile device (20) and the secured object (30) is used to encrypt the second password message (76).

### Keypad Terminal

S48. A system (1) according to any of the preceding system embodiments, wherein the system further comprises a keypad terminal (60).
S49. A system (1) according to the preceding system embodiment, wherein the system is configured to allow the user to facilitate authentication at the secured object (30) by entering the second user password (768) on the keypad terminal (60), wherein the keypad terminal (60) comprises the user password entry device.
S50. A system according to the preceding system embodiment, wherein the keypad terminal (60) is configured to transfer the second user password (768) to the secured object (30).
S51. A system according to the preceding system embodiment, wherein the keypad terminal (60) is configured to encrypt the second user password (768) before sending it to the secured object (30).
S52. A system according to the preceding system embodiment and with the features of embodiment S11, wherein the keypad terminal (60) is configured to encrypt the second user password (768) using the public key (34) of the secured object (30) through an asymmetric encryption scheme, such that, it can only be decrypted using a respective secured object private key (36).
S53. A system according to the preceding system embodiment, wherein the keypad terminal (60) is configured to generate a pair of temporary private-public keys and to transmit the temporary public key to the secured object (30).
S54. A system (1) according to the preceding system embodiment, wherein the keypad terminal (60) is configured to encrypt the second user password (768) with the temporary private key through an asymmetric encryption scheme, such that, it can only be decrypted with the respective temporary public key.
S55. A system (1) according to the preceding system embodiment, wherein the Diffie-Hellman (DH) protocol or the Elliptic-Curve Diffie-Hellman (ECDH) protocol is used to transfer the second password message (76) from keypad terminal (60) to the secured object (30).
S56. A system (1) according to the preceding system embodiment, wherein at least one nonce is transmitted between the keypad terminal (60) and the secured object (30).
S57. A system (1) according to the preceding system embodiment, wherein the at least one nonce transmitted between the keypad terminal (60) and the secured object (30) is used to encrypt the second password message (76).

### Secured Object User Interface

S58. A system (1) according to any of the preceding system embodiments, wherein the secured object (30) comprises a user interface (31).
S59. A system (1) according to the preceding system embodiment, wherein the system is configured to allow the user to facilitate authentication at the secured object (30) by entering the second user password (768) on the user interface (31) of the secured object (30) wherein the user interface (31) comprises the user password entry device.

### Authentication at Secured Object

S60. A system (1) according to any of the preceding system embodiments and with the features of embodiments S29 and at least one of embodiments S37, S49 and S59, wherein the secured object (30) receives the first user password (748) and the second user password (748).
S61. A system (1) according to the preceding embodiment and with the features of embodiment S32 and/or S34, wherein the secured object (30) is configured to decrypt the first user password (748) using a secured object private key (36) and/or with a password server public key (44).
S62. A system (1) according to any of the preceding system embodiments and with the features of embodiment S60 and S41 and/or S43, wherein the secured object (30) is configured to decrypt the second user password (768) using the secured object private key (36) and/or the temporary public key.
S63. A system (1) according to any of the preceding system embodiments and with the features of embodiment S60 and S52 and/or S54, wherein the secured object (30) is configured to decrypt the second user password (768) using the secured object private key (36) and/or the temporary public key.
S64. A system (1) according to any of the preceding system embodiments and with the features of embodiment S60, wherein the secured object (30) is configured to compare the first user password (748) with the second user password (768).
S65. A system (1) according to any of the preceding system embodiments and with the features of embodiment S60, wherein the system is configured to allow the user to be authenticated by the secured object (30) if the first user password (748) is the same as the second user password (768).
S66. A system (1) according to any of the preceding system embodiments and with the features of embodiment S60, wherein the secured object (30) is configured to execute a command, such as an unlock or lock command, if user is authenticated by the secured object (30).
S67. A system (1) according to any of the preceding system embodiments and with the features of embodiment S60, wherein the system is configured to allow the user to use a service of the secured object (30) if the user is authenticated by the secured object (30).

### Types of Communications

S68. A system (1) according to any of the preceding system embodiments, wherein the mobile device (20) and the password server (50) are configured to communicate through a wireless, wired and/or optical network, such as: the Internet, cellular networks (e.g. GPRS, UMTS, LTE), a local area network (e.g. Ethernet, WiFi).
S69. A system (1) according to any of the preceding system embodiments, wherein the mobile device (20) and the secured object (30) are configured to communicate through NFC, Bluetooth®, Infrared-based and/or socket-based communication protocols.
S70. A system (1) according to any of the preceding system embodiments and with the features of embodiment S48, wherein the password server (50) and the trust center (50) are configured to communicate through a wireless, wired and/or optical network, such as: the Internet, cellular networks (e.g. GPRS, UMTS, LTE), a local area network (e.g. Ethernet, WiFi), NFC, Bluetooth®, Infrared-based and/or socket-based networks.

Below, method embodiments will be discussed. These embodiments are identified by the letter M followed by a number. When reference is herein made to method embodiments, these embodiments are meant.
M1. An authentication method (2) of a user at a secured object (30), based on a comparison of a first user password (748) and a second user password (768) wherein
   the first user password (748) is transferred from a password server (50) to the secured object (30) via a mobile device (20); and
   the second password is transferred from the user to the secured object (30) via a mobile device (20) or keypad terminal (60) or a direct entry of the second user password (768) to the secured object (30).
M2. An authentication method (2) according to the preceding method embodiment, wherein the mobile device (20) requests a first user password (748) from the password server (50).
M3. An authentication method (2) according to any of the preceding method embodiments wherein a trust center (40) provides a trusted public key database for asymmetric encryption.
M4. An authentication method (2) according to the preceding method embodiment, wherein the password server (50) requests a secured object public key (34) from the trust center (40).
M5. An authentication method (2) according to the preceding method embodiment, wherein the password server (50) provides a secured object identity (32) to the trust center (40).
M6. An authentication method (2) according to the preceding method embodiment wherein a trust center (40) transmits a secured object public key (34) to the password server (50).
M7. An authentication method (2) according to any of the preceding method embodiments, wherein the password server (50) stores at least one user password for at least one user.
M8. An authentication method (2) according to the preceding method embodiment, wherein the password server (50) transmits the first user password (748) to the mobile device (20).
M9. An authentication method (2) according to the preceding method embodiment and with the features of embodiment M6, wherein the password server (50) encrypts the first user password (50) using the public key of the secured object (30) through an asymmetric encryption scheme.
M10. An authentication method (2) according to the preceding method embodiment, wherein the password server (50) encrypts and/or signs the first user password (50) using a password server private key (56).
M11. An authentication method (2) according to any of the preceding method embodiments and with the features of embodiment M8, wherein the mobile device stores the encrypted first user password (748) received from the password server (50).
M12. An authentication method (2) according to any of the preceding method embodiments, wherein the user enters the second user password (768) on the mobile device (20).
M13. An authentication method (2) according to the preceding method embodiment, wherein the mobile device (20) encrypts the second user password (768) using a secured object public key (34) through an asymmetric encryption scheme.
M14. An authentication method (2) according to the preceding method embodiment, wherein the mobile device (20) encrypts and/or signs the second user password (768) using a mobile device private key (26).
M15. An authentication method (2) according to any of the preceding embodiments and with the features of embodiment M13, wherein the mobile device (20) generates a temporary private key (536) and a temporary public key (534).
M16. An authentication method (2) according to the preceding method embodiment, wherein the mobile device (20) transmits the temporary public key (534) to the secured object (30).
M17. An authentication method (2) according to the preceding method embodiment, wherein the mobile device (20) encrypts the second user password (768) using the temporary private key (536).
M18. An authentication method (2) according to any of the preceding embodiments and with the features of embodiment M13, wherein at least one random number, such as nonce, is exchanged between the mobile device (20) and the secured object (30).
M19. An authentication method (2) according to the preceding method embodiment, wherein the at least one random number is merged with the second user password (768) before and/or while and/or after the second user password (768) is encrypted.

### Keypad Terminal

M20. An authentication method (2) according to any of the preceding method embodiments, wherein the user enters the second user password (768) on keypad terminal (60).
M21. An authentication method (2) according to the preceding method embodiment, wherein the keypad terminal (60) encrypts the second user password (768) using a secured object public key (34) through an asymmetric encryption scheme.
M22. An authentication method (2) according to the preceding method embodiment, wherein keypad terminal (60) encrypts and/or signs the second user password (768) using a keypad terminal private key.
M23. An authentication method (2) according to any of the preceding embodiments and with the features of embodiment M21, wherein the keypad terminal (60) generates a temporary private key and a temporary public key.
M24. An authentication method (2) according to the preceding method embodiment, wherein keypad terminal (60) transmits the temporary public key to the secured object (30).
M25. An authentication method (2) according to the preceding method embodiment, wherein keypad terminal (60) encrypts the second user password (768) using the temporary private key (536).
M26. An authentication method (2) according to any of the preceding method embodiments and with the features of embodiment M21, wherein at least one random number, such as nonce, is exchanged between keypad terminal (60) and the secured object (30).
M27. An authentication method (2) according to the preceding method embodiment, wherein the at least one random number is merged with the second user password (768) before and/or while and/or after the second user password (768) is encrypted.

### Directly at secured object

M28. An authentication method (2) according to any of the preceding method embodiments, wherein the secured object (30) comprises a user interface (31).
M29. An authentication method (2) according to any of the preceding method embodiments, wherein the user facilitates authentication at the secured object (30) by entering the second user password (768) on the user interface (31) of the secured object (30).

### Authentication

M30. An authentication method (2) according to any of the preceding method embodiments, wherein the secured object (30) compares the first user password (748) with the second user password (768).
M31. An authentication method (2) according to any of the preceding method embodiments, wherein the user is authenticated by the secured object (30) if the first user password (748) is the same as the second user password (768).
M32. An authentication method (2) according to any of the preceding method embodiments, wherein the secured object (30) executes a command, such as an unlock or lock command, if user is authenticated by the secured object (30).
M33. An authentication method (2) according to any of the preceding method embodiments, wherein the user is allowed to use a service of the secured object (30) if the user is authenticated by the secured object (30).

### Types of Communications

M34. An authentication method (2) according to any of the preceding method embodiments, wherein the mobile device (20) and the password server (50) communicate through a wireless, wired and/or optical network, such as: the Internet, cellular networks (e.g. GPRS, UMTS, LTE), a local area network (e.g. Ethernet, WiFi).
M35. An authentication method (2) according to any of the preceding method embodiments, wherein the mobile device (20) and the secured object (30) communicate through NFC, Bluetooth®, Infrared-based and/or socket-based communication protocols.
M36. An authentication method (2) according to any of the preceding method embodiments and with the features of embodiment M3, wherein the password server (50) and the trust center (50) communicate through a wireless, wired and/or optical network, such as: the Internet, cellular networks (e.g. GPRS, UMTS, LTE), a local area network (e.g. Ethernet, WiFi), NFC, Bluetooth®, Infrared-based and/or socket-based networks.
Below, use embodiments will be discussed. These embodiments are identified by the letter U followed by a number. When reference is herein made to system embodiments, these embodiments are meant.
U1. Use of the system (1) according to any of the preceding system embodiments and/or the authentication method (2) according to any of the preceding method embodiments in a car sharing service.
U2. Use of the system (1) according to any of the preceding system embodiments and/or the authentication method (2) according to any of the preceding method embodiments in a bike sharing service.
U3. Use of the system (1) according to any of the preceding system embodiments and/or the authentication method (2) according to any of the preceding method embodiments in an apartment sharing service.

### Brief description of the drawings

- Figure 1: depicts a schematic view of a system configured for user authentication at an offline unit;
- Figure 2: depicts a schematic view of a password request procedure;
- Figure 3a: depicts a schematic view of a user authentication procedure at an offline secure object according to an embodiment of the present technology;
- Figure 3b: depicts a schematic view of a user authentication procedure at an offline secure object according to another embodiment of the present technology;
- Figure 3c: depicts a schematic view of a user authentication procedure at an offline secure object according to yet another embodiment of the present technology;
- Figure 4: depicts a schematic view of the structure of the messages exchanged to realize a user authentication at an offline secured object;
- Figure 5a: depicts a sequence diagram of a method for password-based authentication at an offline secured object according to an embodiment of the present invention;
- Figure 5b: depicts a sequence diagram of a method for password-based authentication at an offline secured object according to another embodiment of the present invention; and
- Figure 5c: depicts a sequence diagram of a method for password-based authentication at an offline secured object according to yet another embodiment of the present invention.

### Detailed description of the drawings

In the following, exemplary embodiments of the invention will be described, referring to the figures. These examples are provided to provide further understanding of the invention, without limiting its scope.

In the following description, a series of features and/or steps are described. The skilled person will appreciate that unless required by the context, the order of features and steps is not critical for the resulting configuration and its effect. Further, it will be apparent to the skilled person that irrespective of the order of features and steps, the presence or absence of time delay between steps, can be present between some or all of the described steps.

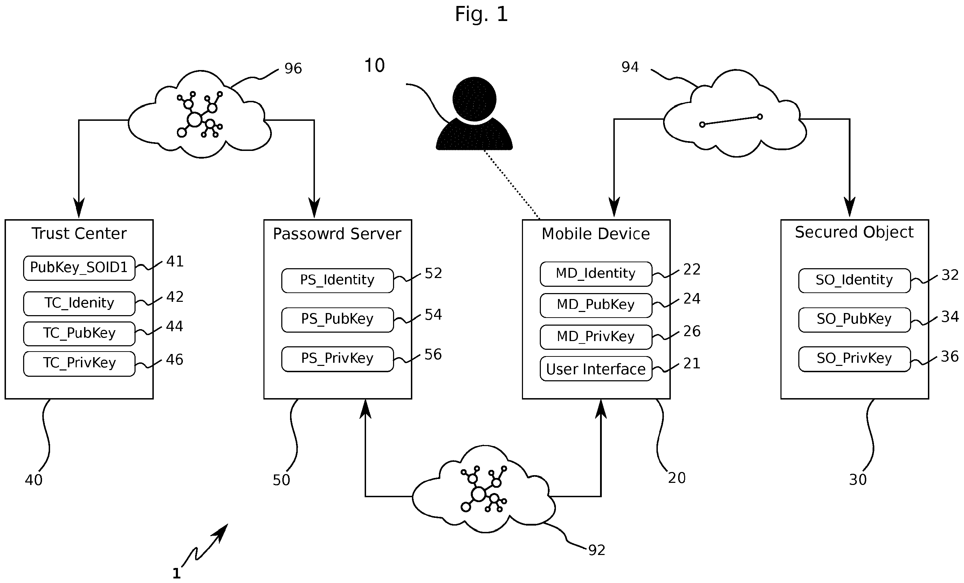

**Fig. 1** depicts a schematic view of a system 1 that can be configured for a user authentication at an offline unit. Thus, the system 1 can comprise a user 10 and a secured object 30, wherein the secured object 30 can be offline. Moreover, the user 10 may require using a service and/or execute at least one command at the secured object 30, hence proper user authentication at the secure object 30 may be required. A command can be an act and/or instruction that can be executed by the secured object 30. Preferably, the command can be executed after a successful authentication and/or authorization of the user 10. For example, the command that can be executed by the secured object can a lock command or an unlock command - wherein the secured object 30 can be configured as (or can be part of) an electronic lock. In yet another example, the command that can be executed by the secured object 30 can be an engine start or engine stop command - wherein the secured object 30 can be configured to indicate the starting and/or stopping of an engine of a vehicle. The secured object 30 can be secured such that only authorized and/or authenticated users 10 can use a service or can execute a command at the secured object 30. Hence, user 10 may have to get authorization and/or authentication before using the service and/or executing a command in the secured object 30. System 1 can allow the user 10 to get authorization for using a service and/or to authenticate his/her identity before using the service.

For example, in a car sharing service it can be advantageous that a vehicle can be opened by multiple users. However, for security reasons the vehicle can be secured such that not anyone who attempts to open the vehicle can open it. Thus, the vehicle can be secured (e.g. with an electronic lock) such that, only authorized users can open (and use) the vehicle. System 1 may allow for user authorization and authentication in such a scenario. In addition, the authentication of the user at the secured object (in this example the vehicle) can be done even if the secured object (in this example the vehicle) can be offline.

Herein, a device (or in general an entity) can be offline if it cannot be connected to a wide area network such as the internet or the cellular networks (e.g. GPRS, UMTS, LTE). However, as referred herein, the offline device can participate in short-distance networks, such as a short-distance network with bidirectional communication, Near-Field-Communication (NFC), Bluetooth®, infrared-based communication, sound-wave based communication, light wave based communication or the like. Thus, the secured object 30 can be offline. That is, the secured object may not comprise an internet connection, or a cellular network connection or a wireless access point. However, the secured object 30 can be connected to short-distance communication networks (usually ad-hoc networks), such as, NFC or Bluetooth®. Additionally, it can be advantageous that the short-distance communication that the secured object can be connected to, can be a bidirectional communication. In other words, the secured object 30 can send and receive data through the short-distance, bidirectional communication channel.

As discussed, the system 1 can comprise a user 10 and a secured object 30. Further, the system 1 can comprise a mobile device 20. The mobile device 20 can be a smartphone, laptop, electronic key, tablet, NFC card etc. In general, the mobile device 20 can be any device that can be connected to any of the upper-mentioned networks. The mobile device 20 can be used (controlled) by the user 10. The mobile device 20 can facilitate the authorization and authentication of the user 10. In addition, the mobile device 20 can comprise a user interface 21. The user interface 21 can allow the user 10 to provide information, such as a user password, to the system 1 for authorization and/or authentication purposes. The user interface 21 can allow the user to select a service, and/or register for a service, and/or provide user data, such as, personal information regarding the user 10. For example, in a smartphone 20 an app (software) may be provided that user 10 can use for requesting a service and/or receiving authorization to use the service and/or provide authentication information, such as, a user password.

System 1 can further comprise a password server 50. As discussed, to facilitate the authorization and/or authentication of the user 10 a user password can be used. That is, a user 10 before using a service or while requesting a service can deposit a user password, that can be kept secret - i.e. known only by the user 10. Thus, the user 10 can authenticate his/her identity by providing his/her user password. The password server 50 can be configured for storing the passwords of the users 10. The system 1 can comprise multiple users 10 and the password server can store the user password for each user 10 (or at least some of the users 10). Moreover, a user 10 can comprise more than one password (e.g. different passwords for different types of services and/or commands that can be executed at the secure object 30). Thus, in general, the password server 50 can store at least one user password for at least one user 10 of the system 1.

It can be advantageous, for increasing security, that user passwords can be stored in the password server 50 in a secure manner. In one secure manner the user password content can be transformed into seemingly random data. Usually in cryptography a hash function can be used for such a purpose. A hash function is a function that can map data (usually of arbitrary size) to another set of data (usually of a fixed size). Further a hash function usually is a deterministic function - i.e. the same input data to the function will always produce the same output. In addition, a hash function can be a one-way function - i.e. a non-invertible function, that is, it can be impossible or computationally expensive to obtain the data that were input to the hash function based only on the output of the hash function. Note that herein the term "computationally expensive" means that an algorithm for solving a problem (e.g. such as obtaining original data from the hashed value of such data) takes a very long time (e.g. days or years) to provide a solution (e.g. the original data). Thus, instead of storing the original password that user 10 supplied, a hash function can compute the hash value of the original password and it can be advantageous that only the hash of the password is stored in the password server 50. To further increase security, the password can be salted and/or peppered. Salt refers to adding and storing random data to a hash. That is, random data is generated and is added to the password before being hashed. Then, the password comprising also the added random data is hashed. The hash and the random data are stored. Peppering can be done in a similar manner with salting however, the random data are not fully store but some defined bits can be removed from the random data before (or after) storing them. As it can be obvious to a person skilled in the art, a full description of hash, salt and pepper (and other cryptographic terms used within the document) is omitted here and only a short general description is provided.

Thus, a user 10 can provide a user password (that can be known only by the user 10), which can be stored in a secure manner in the password server 50. The user 10 can provide the password before using a service or while requiring a service. The user 10 can provide the user password to the password server 50 before a user authentication can take place at the secured object 30. Thus, every time the user 10 can require using a service or execute a command in the secured object 30 the user can provide a password or every time a user authentication process can take place at the secured object 30. Additionally, or alternatively, the user 10 can provide a user password during a user registration process. During such a process, a user 10 can register in the system 1 - i.e. can become part of the system 1. During the user registration process the user 10, among other personal data, can also provide a user password. When user 10 requires using a service of system 1 and/or authenticate his/her identity at the secured object 30, the user 10 can request the password (an encrypted version of the password) from the password serve 50. This can allow for a two-step authentication (as will be discussed in later paragraphs). The user 10 may be provided with the option of updating the user password. Before updating the password 10 an authentication of the user 10 may be performed. In other words, the user 10 may provide a different password to the password server 50 every time a user authentication procedure can take place at the secured object 30 or can reuse a previously deposited password at the password server 50 for multiple authentication procedures at the secured object. In addition to the later scenario, the user 10 may also be provided with the option of changing the user password after a successful of the authentication of the identity of the user 10.

As discussed, the secured object 30 can facilitate the authentication of the user 10. That is, before executing a command (as required by the user 10) the secured object 30 can verify the user's 10 identity through an authentication process. However, beside authentication, it can also be advantageous that the user 10 be authorized for using such a service. For example, through an authorization process credentials of a user 10 (i.e. information or user features regarding the user 10 that can be comprised in the system 1) can be checked before providing user 10 the right (i.e. authorizing the user 10) to use a service and/or execute a command in the secured object 30. For example, at least one user feature (e.g. a payment feature - checking if the user 10 provided a payment to use the service) can be checked before authorizing the user 10. The password server 10, can be configured to store further user information to check if a user 10 can be authorized to use a service. Further, the password server 50 can be used to authorize the user 10 for using a service and/or executing a command in the secured object 30. It can also be advantageous to verify the identity of user 10 before authorizing the user 10. Thus, the password server 50 can be configured for authorization and/or authentication of the user 10.

The password server 50 and the mobile device 20 can comprise a communicative connection. That is, the password server 50 and the mobile device 20 can exchange data between each other. Thus, the mobile device 20 and the password server can be connected to a network 92 - i.e. the password server 50 and the mobile device 20 can comprise a network interface for facilitating the connection with the network 92. Network 92 can be a wireless network (e.g. WLAN, UMTS, GPRS, LTE) or wired based (e.g. LAN) or a combination of the upper mentioned networks. In general, network 92 can be any public and/or private network, wireless and/or wired network that can allow a remote communication between the mobile device 20 and the password server 50. For example, the password server 50 and the mobile device 20 can both be online - i.e. comprise an internet connection - which can allow a remote communication between the two.

The mobile device 20 and the secured object 30 can exchange data. That is, they can be communicatively connected and can exchange data through a network 94. As discussed, the secured object 30 can be offline. Thus, network 94 generally can be a short-distance communication network such as, NFC, Bluetooth® or similar networks. The communication network 94 can be established by the mobile device 20 and the secured object 30 without relying on cellular carrier networks, wireless access points, or internet infrastructure. Network 94 can be a peer-to-peer network wherein one (or more) mobile devices 20 can communicate directly to one (or more) secured objects 30 and/or vice-versa. Network 94 can also be a mesh network comprising one mobile device 20 and multiple secured objects 30 or one secured object 30 and multiple mobile devices 20 or multiple mobile devices 20 and multiple secured objects 30 wherein communication between participating devices can be made in multiple hops (i.e. the packets can be routed from one device to another within the network topology).

Networks 92 and 94 can be public networks. Thus, the networks 92 and 94 may not guarantee a secure connection between the communicating entities. An eavesdropper can intercept the connection and/or can obtain the messages exchanged between the communication entities. For example, if a first password message (produced by the password server 50) and the user password (entered by the user 10 on a mobile device 20) are obtained by a non-intended entity (i.e. an eavesdropper), then the non-intended entity could use the services, though the non-intended entity is not authenticated and/or authorized. Put it simply, to exchange messages through (unsecured) networks 92 and 94 it can be advantageous that the information is encrypted before supplying it to the network. Data should be encrypted such that the decryption of the data without the decryption key can be either impossible or computationally complex such that data cannot be decrypted in reasonable amount of time - i.e. data may take days or even years to be decrypted without a proper decryption key.

Multiple encryption methods are present in the state of the art. Encryption methods can use an encryption key and mathematical functions (usually one-way mathematical functions) to transform original data into encrypted data. The encryption key can be data (usually a long number) that can be generated using mathematical functions or may be randomly generated. It can be advantageous for the transformations - i.e. mathematical functions - applied to the original data can be reverted only if the right key is used. For example, if transformation of the data is done using a public key from an encryption key pair, then the transformations can only be reverted if the private key from the respective encryption key pair is used. Otherwise it may be a very complex problem (i.e. it can require large number of computations) to revert the transformations, such as for example, trying to guess the key that can be used to revert the transformations.

According to one classification encryption methods can be symmetric or asymmetric or a combination between the two. In a symmetric encryption scheme the same encryption key can be used for the encryption and decryption of the data. Since both communicating entities need the encryption key to encrypt and decrypt the data, a secure way of communicating this key to all the communicating parties can usually be the bottleneck of such encryption scheme. For example, a trusted courier may have to communicate the encryption key to all communicating entities before communication can take place.

In asymmetric encryption instead of using one key for encryption and decryption a pair of keys is used. Each communicating party can comprise (or generate) a pair of keys, named: public key and private key. The pair of public and private keys can be generated together - i.e. one is determined by the other, however it can be practically impossible (or computationally complex) obtaining the one from the other. For example, having one of the keys it can be a very computationally expensive procedure, that can take years of computations, to obtain the other key. Furthermore, the asymmetric algorithm schemes are configured such that if data is encrypted with one of the keys of the pair it can only be decrypted with the other. Thus, asymmetric encryption schemes can allow to make one of the keys public, while the other is stored in a secured location and can be known only by the party that generated the respective pair of keys. As the name implies, the public key can be made public while the private key can be kept secret. Thus, for a group of communicating entities to exchange encrypted data they firstly need to exchange their public keys. The public keys can be exchanged through a public or unsecured communication channel as it is not required for them to be kept secret. Furthermore, when the public keys are exchanged, mechanisms (e.g. public key infrastructure PKI, signing party, digital certificates issued by certificate authorities etc.) for ensuring that the public key really belongs to the respective entity can be used. For entity A to send a message to entity B it can encrypt the message with the public key of entity B and on the other side, entity B can decrypt the message with its private key. Furthermore, only the private key of entity B can be used to decrypt the message (no other key would work), hence ensuring secrecy of the data as long as the private key of entity B is kept secret by entity B. Thus, in contrast to symmetric encryption, asymmetric encryption does not require a secure manner for exchanging the keys.

As depicted in Fig. 1, the password server 50, the mobile device 20 and the secured object 30 can comprise a public-private pair of keys respectively referred with numerals 54 (PS_PubKey), 24 (MD_PubKey) and 34 (SO_PubKey) for the public keys and respectively 56 (PS_PrivKey), 26 (MD_PrivKey) and 36 (SO_PrivKey) for the private keys. The pair of keys can facilitate the use of asymmetric encryption schemes (as discussed above. The pair of keys can be assigned to each device during an initialization procedure (or during a set-up procedure). That is, when the mobile device 20, password server 50, secured object 30 and/or trust center 40 become part of the system 1, an encryption identity can be created for them, e.g. by the trust center 40 or by the respective component itself, and can also be stored, e.g. in the trust center 40. The components of the system 1 can maintain the assigned encryption identities (comprising the pair of encryption keys or only the public key) until an update of the encryption identity for the respective system component can be performed - updates of the encryption identities can be advantageous for increasing security.

In addition, the password server 50, the mobile device 20 and the secured object 30 can comprise a unique identity - the password server identity 52 (PS_Identity), the mobile device identity 22 (MD_Identity) and the secured object identity 32 (SO_Identity). An identity can be a data structure (such as a string of characters, numbers, special characters) that can be unique to the entity it can belong to, that is, no two entities in the system 1 can comprise the same identity. The identity can facilitate the identification of the entities of the system 1. This can be particularly advantageous particularly when system 1 can comprise multiple entities, such as multiple password server 50 and/or multiple mobile devices 20 and/or multiple secured objects 30. In some embodiments, the identity can be a random number (or in general random data) that can be generated by the entity itself. For example, the mobile device 20 can generate its own identity 22 and can store it in a memory (or deposit it in the password server). The generated number 22 would be unique and constant to the mobile device 20. A long number of digits (or characters) can ensure that it can be almost impossible (with a very low probability, such that two devices draw the same random identity. In some embodiments, the identity of the components of the system 1 is assigned to each device by the password server 50 (or a central unit of system 1). The password server 50 (or a central unit) can ensure the uniqueness of the identity 52, 22, 32 of the components of system 1. In yet some embodiments, a unique identification number assigned to the system components 50, 20, 30 during a manufacturing process (e.g. MAC address) can be used as a unique identifier for the respective component.

A trust center 40 may be provided to the system 1 for storing the public keys 34 of the secured objects 30. In addition, the trust center 40 can facilitate the creation of encryption identities for the components of system 1. Furthermore, the trust center 40 can store the public keys of the system components - the password server 50, mobile device 20 and secured object 30. It may be required that the password server 50 encrypt at least one message such that only the secured object 30 can be able to decrypt it. As defined by the asymmetric encryption, the data need to be encrypted with the public key 34 of the secured object 30. However, as the secured object 30 can be offline (i.e. password server 50 and secured object 30 are not communicatively connected) the password server 50 cannot obtain the public key 34 of the secured object 30 directly from the secured object 30. Thus, the trust center 40 can comprise the public keys of at least one secured object 30 of the system 1. Furthermore, the trust center can store the secured object identities 32 in such a manner that the trust center can know to which secured object 30 (based on the id 32) the public key 34 belongs to. For example, the trust center 40 can store at least one data structure 41, comprising a public key 34 of a secured object 30 and the identity 32 of the secured object 30 the public key 34 belongs to. The trust center 40 can comprise such a data structure 41 for each secured object 30 (or at least some of the secured objects 30).

The password server 50 and the trust center 40 can be connected via network 96. Network 96 can be any of the upper-mentioned networks. Hence, the password server 50 can obtain the public key 34 of a secured object 30 from the trust center 40. For example, the password server 50 can require the public key 34 of a secured object 30 attaching to the request an id 32 of the secured object 30. The trust center 40 can recognize the id 32 of the secured object 30 and can reply to the password server 50 by providing the proper public key 34. In addition, the trust center 40 can also comprise a public-private pair of keys - trust center public key 44 (TC_PubKey) and trust center private key 46 (TC_PrivKey), such that an encrypted communication can take place between the trust center 40 and the password server 50.

Similarly, to other system components, the trust center 40 can comprise a trust center identity 42 (TC_Identity). The trust center identity 42 can be particularly advantageous if multiple trust centers 40 can be part of the system 1.

In some embodiments, the trust center 40 can be a certificate authority. A certificate authority (in cryptography) is an entity that can issue digital certificate. A digital certificate can be used to certify the ownership of a public key. Hence, the certified authority is usually trusted by entities participating in a communication - i.e. other entities trust the information provided by the certified authority is true. Thus, the trust center 40 can issue digital certificates regarding the ownership of a public key. For example, the digital certificate can comprise the public key 34 of a secured object 30, the secured object identity 32 and this information can be encrypted with the private key 46 of the trust center 40. To ensure reliable transmission a digital signature may be calculated using the payload of the digital certificate and the private key of the trust center. An example of a certificate system is a X.509 system. However, other mechanisms (or protocols) can be used for proving and verifying that a public key belongs to the entity that claims that the public key belongs to it. Thus, entities that can receive the digital certificate from the trust center 40 can verify it using the public key of the trust center 40. In this manner, the trust center 40 on the one hand provides the public keys 34 of the secured objects 30 and on the other hand can prove the ownership of the public key 34 (given that other entities trust the trust center 40). At the same time (using the digital signature) reliable and uncorrupted transmission of the data may be ensured.

System 1 can allow for a separation of the security procedures - that can provide a reliable authentication of user 10 at the secured object and that can facilitate the creation and maintenance of encryption identities - and the service procedures. System 1 can allow for a first party - a service provider to offer a service to a second party - the user 10. The service provider can operate the password server and the secured objects 30 while the user 10 can operate the mobile device 20. In addition, a third party can offer the data secrecy and integrity for authenticating the user 10 at the secured object 30 before the user 10 can use the service, offered by the service provider. Note, that neither the first party - the service provider, nor the user 10 need to deal with the details of data security and integrity. This can be provided by the third party that can operate the trust center 40. However, in some embodiments, the same party, e.g. the service provider, can operate both the password server 50 and the trust center 40. In such embodiments, the trust center 40 can be integrated in the password server 50 (or vice-versa).

To sum up, Fig. 1 depicts a system configured for password-based authentication at an offline control unit (i.e. offline secured object 30). The offline secured object 30 can be an electronic lock (e.g. of a vehicle, or apartment) or a car control unit. System 1 can allow the implementation of a second factor authentication for smartphone based offline access systems.

To achieve this a first user password can be transferred from a server (password server 50) to the secured object 30, via the mobile device 20, and then compared on the secured object 30 with a second user password entered by the user 10 on a mobile device 20 and sent directly from the mobile device 20 to the secured object 30.

As there is no direct connection between the secured object 30 and the trust center 40 and/or between the secured object 30 and the password server 50, the first user password can be transferred to the secured object 30 from the password server 50 over a mobile device 20 (e.g. a smartphone) without getting compromised. In addition, a password entry on the mobile device 20 by a user 10 can be securely transferred from the mobile device 20 to the secured object 30.

Thus, the system 1 can comprise a trust center 40 that can provide a trusted public key database for asymmetric cryptography. System 1 can further comprise a password server 50 that can store at least one user password of at least one user 10 hashed, salted and/or peppered. System 1 can further comprise a mobile device 20 that can be used by user 10 to request a service, receive authorization and/or facilitate authentication by allowing the user 10 to provide authenticating information, such as, the user password. Further, system 1 can comprise a secured object 30 that can verify the password of the user 10. The secured object 30 can execute a command upon successful authorization and authentication of user 10 and/or based on type of the service required by user 10. A password can be a secret that can be known only by the user 10.

The user password (referring to the first user password and the second user password) can be in the form of characters, numbers, special characters or any combination of the three. The password can also be a unique feature of the user, such as, a fingerprint, an iris scan, a face scan. The user password can also be a personal identification number (PIN), or a transaction authorization number (TAN). The user password can be used by the user 10 to prove his/her authenticity - i.e. to prove that the user 10 is indeed who he/she claims to be. The password can further be used by the password server 50 and/or the secured object 30 and/or the trust center 30 to verify (or authenticate) identity of the user 10.

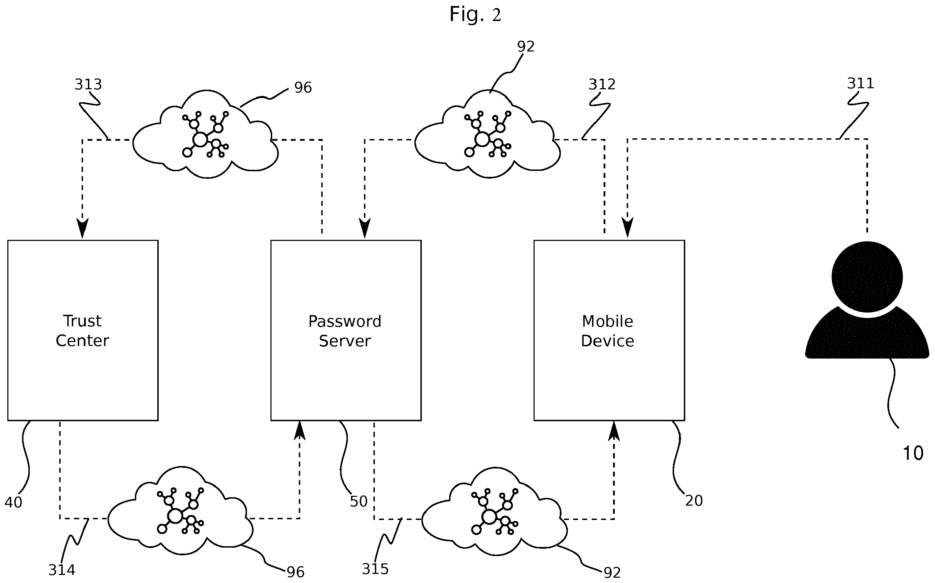

**Fig. 2** illustrates a procedure wherein a user 10 can get a first user password from the password server 50 for authenticating on the secured object 30 (see Fig. 1). That is, a user 10 can request a first user password from the password server 50. In addition, the user 10 can select a type of service and can communicate this to the password server 50. Furthermore, the user 10 can authenticate his/her identity to the password server 50 and the password server 50 can verify user's 10 identity. The password server 50 upon successful authentication of user 10 can transfer packet first password message (or group of packets) to the user 10. Said first password message can be read (decrypted) only by the secured object 30 and the secured object 30 can determine that the packet came from the password server 50. A more detailed description of this procedure will be described in the following paragraphs.

In step 311, the user 10 can enter (or select) a password request on the mobile device 20. The entering (or selection) of the password request on the mobile device 20 can be facilitated by the user interface 21 (refer to Fig. 1) of the mobile device 20. Additionally, user 10 may select a service and/or a command to be executed on the secured object 30. Similarly, the selection of the service can be facilitated by the user interface 21 of the mobile device 20. The user 10, while requesting for the user password, can also specify the secured object 30 wherein the user 10 required to be authenticated. This can be done by providing the secured object identity 32 of the respective secured object 30. In some embodiments, user 10 can enter the secured object identity which can then be transmitted to the password server (with the user password request). In some other embodiments, the user can select a secured object 30 on the user interface 21 which can be a graphical user interface 21, such as a software 21, and the user interface 21 (e.g. a software) can provide the secured object identity 32.

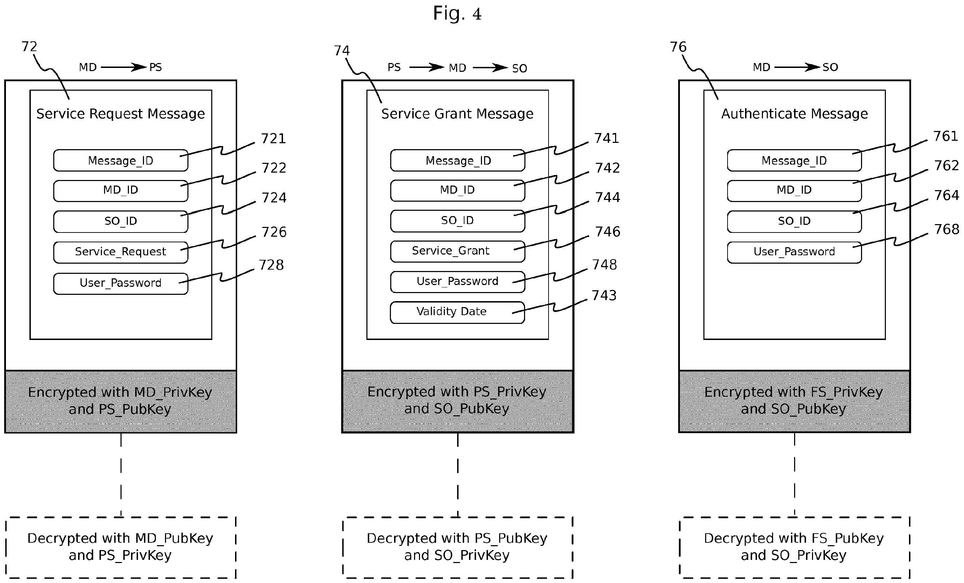

In step 312, the mobile device 20 transfers the user request to the password server 50. As discussed, the mobile device 20 and password server 50 can be connected to a network 92 that can facilitate the exchange of data between them. To ensure security of the data exchanged between the mobile device 20 and the password server 50, an encryption schemes, such as an asymmetric encryption scheme based on the public-private pair of keys 24, 26 of the mobile device 20 and the public-private pair of keys 54, 56 of the password server 50 can be used. Hence, the password server 50 and the mobile device 20 can comprise a public-private pair of keys 54, 56 and 24, 26 respectively (refer to Fig. 1). The message communicated from the mobile device 20 to the password server 50 in step 312 can be the password request message 72 (refer to Fig. 4).

Upon receiving the password request from user 10, the password server can verify the authenticity of user 10. Further, the password server 50 can verify if the user 10 can be valid for the requested service. If authentication and/or authorization are successful, password server 50 can provide a first user password to the user 10 and can optionally authorize user 10 to use a service and/or execute a command in the secured object 30.

In step 313, the password server 50 requests from the trust center the public key 34 of a secured object 30. For example, in step 312 user 10 can provide the identity 32 of the secured object 30, wherein user 10 requires using a service and/or execute a command. The password server 50 gets the secured object identity 32 and uses it to requests the public key 34 of the secured object 30 with the provided id. In step 314 the trust center can reply to the password server with the requested public key 34 of the secured object 30 with the provided id 32. The exchange of data between the password server 50 and the trust center 40 can take place via network 96.

In step 315 the password server 50 communicated to the mobile device the requested user password - the first user password. The first user password can be encrypted with the secured object public key 34 and with the password server private key 56 through an asymmetric encryption scheme.

Thus, user 10, through the procedure provided in Fig. 2 can be authorized to use a service and/or execute a command on a secured object 30. Furthermore, the user 10 through the procedure described in Fig.2 can be provided with a first user password.

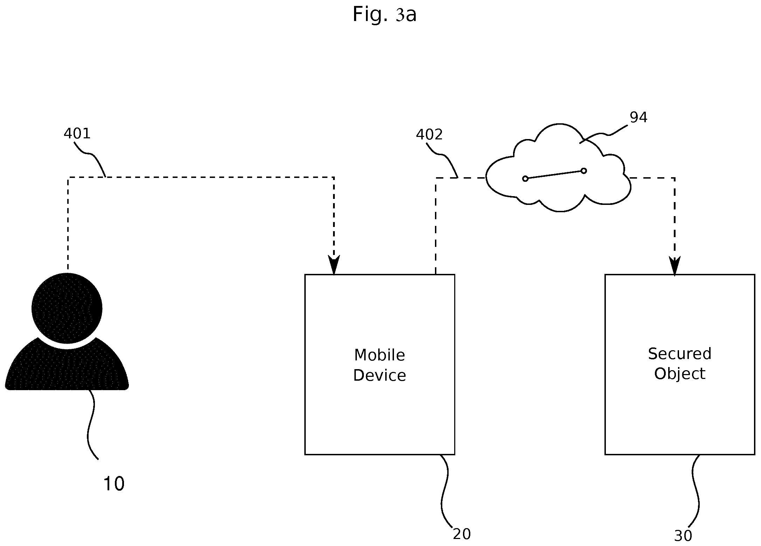

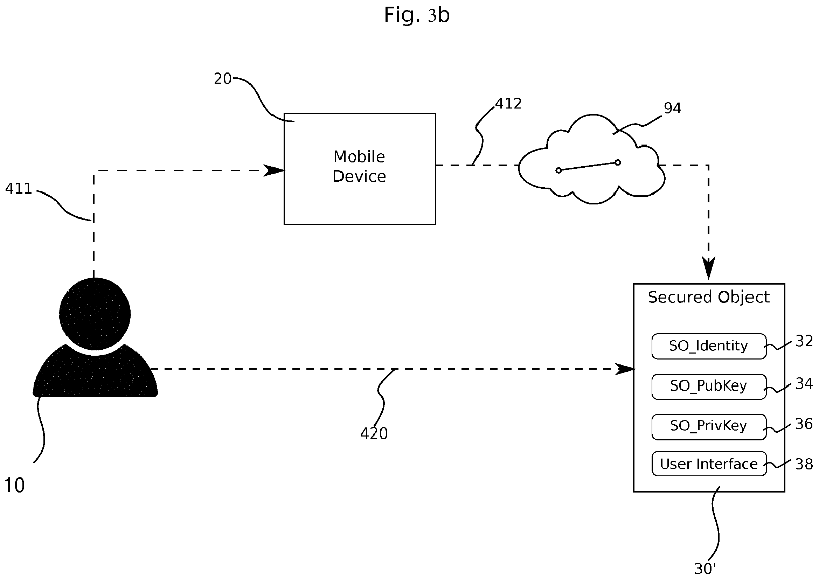

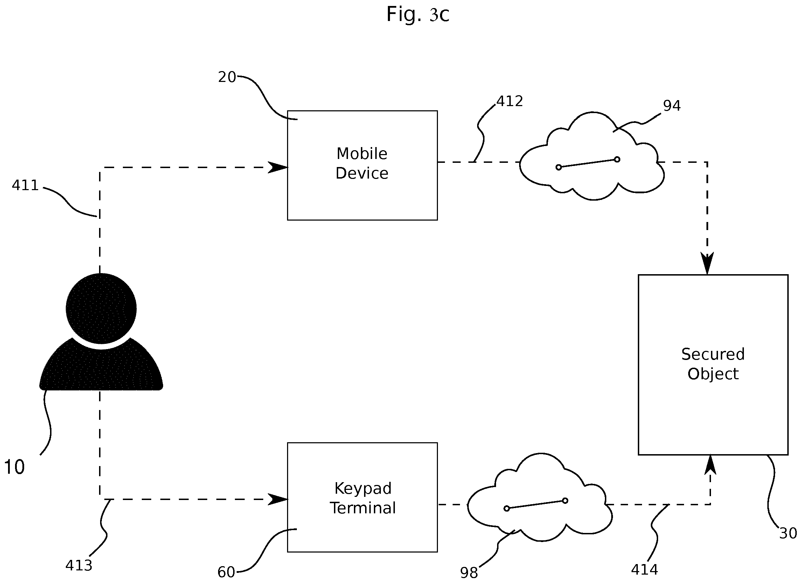

With reference to Fig. 3a, 3b and 3c different embodiments of an authentication request procedure of a user 10 at an offline secured object 30 are provided. As discussed, system 1 may allow for a second factor authentication at an offline unit. The first authentication can be done by the password server 50 that can provide a first user password to the user 10 and was discussed in Fig. 2. The second authentication of user 10 can be done by the secured object 30. During the second authentication user 10, can enter a second user password during a second password entry. The different embodiments provided in Figs. 3a, 3b and 3c differ on the way the second password entry can be done.

In **Fig. 3a**, user 10 can use a mobile device 20, such as a smartphone, for entering the second user password, during a second password entry, for authentication at the secured object 30. Thus, in step 401, user 10 enters the password on the mobile device 20 (e.g. using the user interface 21 of the mobile device 20). In step 402, the second user password that is entered by the user 10 during step 401, can be communicated to the secured object 30. As discussed, the mobile device 20 and the secured object 30 can be connected via network 94. As network 94 usually is a short distance network (as discussed in Fig. 1) it can be advantageous for user 10 to approach the secured object 30 with the mobile device 20 before the mobile device 20 communicates the packet on step 402 to the secured object 30. The message containing the second user password entered by user 10 on step 401 can comprise a second password message 76 (refer to Fig. 4). In step 402, the mobile device 20 can also communicate to the secured object 30 the first password message that it received from the password server 50 (refer to step 315, Fig. 2). To ensure security of the data exchanged between the mobile device 20 and the secured object 50, an encryption schemes, such as an asymmetric encryption scheme based on the public-private pair of keys 24, 26 of the mobile device 20 and the public-private pair of keys 34, 36 of the secured object 50 can be used.

In **Fig. 3b**, the user 10 can use the mobile device 20 only to communicate to the secured object 30 the first password message that it received from the password server 50 (refer to step 315, Fig. 2). That is, in step 411 user 10 can indicate to the mobile device to transmit the first password message to the secured object 30. In step 412, the mobile device 20 can transmit in a secure manner (i.e. using the encryption algorithms discussed with reference to Figs. 2a and 2b) the first password message that it received from the password server 50 (refer to step 315, Fig. 2) to the secured object 30'. In such embodiments the secured object 30' can further comprise a user interface 38. The user interface 38 can allow user 10 to enter the password in step 420. For example, the user interface 38 can be a keypad. Thus, instead of entering the password (during the second password entry) on the mobile device and then transferring the entered password in a secured manner to the secured object 30 (as discussed in Fig. 3a) the password is entered directly on the secured object using a user interface 38 of the secured object 30. It can be obvious that during the second entry of the password, the password need not to be encrypted as it is entered directly on the secured object and thus, cannot pass through a public or unsecured network.

In **Fig. 3c** the first password message is communicated to the secured object 30 through steps 411 and 412 (as discussed in Fig. 3b). Further, a keypad terminal 60 can be provided. The keypad terminal 60 can allow the user to enter a user password and can be communicatively connected to the secured object 30 via the network 98. Network 98 can be a wireless network, such as NFC or Bluetooth® or a wired or socket-t based network. Thus, in step 413, user 10 can enter a password on the keypad terminal 60. In step 414 the entered password in step 413 can be communicated from the keypad terminal to the secured object 30, via network 98. The communicated message in step 414 can be the second password message 76 discussed in Fig. 4.

In any of the embodiments 3a, 3b and 3c, the secured object 30 can be provided with the first password message that the mobile device 20 received from the password server 50 and with a second user password, that the user 10 entered during a second password entry. The secured object 30 can compare the two versions of the password and can verify the authenticity of the user 10 if the passwords are the same. Upon successful verification of authenticity of the user 10 and successful verification of the authorization provided to the user 10, the secured object 30 can execute a command and/or can allow the user 10 to use a requested service.

**Fig. 4** provides a schematic description of the different messages (or packets) that can be exchanged by the components of system 1 to realize a user authentication at an offline secured object.

A password request message 72 can be sent by the mobile device 20 to the password server 50, to request authorization for a user 10 to execute a command at a secured object 30. The password request message 72 can be sent from the mobile device 20 to password server 50 during step 312 of the procedure discussed in Fig. 2. The password request message 72 can comprise a message identity 721. The message identity 721 can be unique to an instance of a password request message 72 and/or can identify type of message - in this case a password request message 72.

The password request message 72 can further comprise a mobile device identity 722 and a secured object identity 724. The mobile device identity 722 can comprise the identity 22 of the mobile device 20 that created the password request message 72. The secured object identity 724 can comprise the secured object identity 32 of a secured object 30 wherein the user 10 requires authentication and/or can request to use a service and/or execute a command.

As discussed it can be advantageous that the exchange of the messages between the entities of the system 1 can be done in a secured and encrypted manner. Thus, as indicated in Fig. 4 the password request message 72 can be encrypted with the mobile device private key 26 of the mobile device 20 (MD_PrivKey) and the password server public key 54 of the password server 50 (PS_PubKey). The encryption of the password request message 72 with the use of the private key 26 of the mobile device 20 can allow the password server 50 to decrypt it with the public key 24 of the mobile device 20. This can ensure the password server 50 that the password request message 72 was created by the mobile device 20 and not by any other third-party. This can further be facilitated if the password server 50 received from the mobile device 20 a public key 24 of the mobile device 20 signed by a trusted certificate authority. In some embodiments, the password request message 72 is singed by the mobile device 20 with its mobile device private key 26. A digital signature can be created by using an encryption key and by calculation a metric based on the data to be singed. The digital signature can allow for a verification of the integrity of the signed data - i.e. can ensure the receiver that the data arrived uncorrupted. In other words, the mobile device 20 can sign the password request message 72, such that, the password server 50 (the receiver) can not only verify that the message came from the mobile device 20, but can also verify integrity of the received data.

In addition, the encryption of the data of the password request message 72 by the public key 54 of the password server 50 can ensure the secrecy of the data, since only the password server 50 can comprise the password server private key 56, required to decrypt the data in an asymmetric encryption scheme.

Further in Fig. 4 a first password message 74 is depicted. A first password message 74 can be created by the password server 50 and can be sent to the mobile device 20 (refer to step 315 in Fig. 2). The first password message 74 can comprise a message identity 741. The message identity 741 can be unique to an instance of a first password message 74 and/or can identify type of message - in this case a first password message 74 type. The first password message 74 can further comprise a mobile device identity 742 and a secured object identity 744. The mobile device identity 722 can comprise the mobile device identity 722 provided to the password server 50 by a password request message 72. Similarly, the secured object identity 724 can comprise a secured object identity 724 provided to the password server 50 by a password request message 72.

In addition, the first password message 74 can comprise a first user password 748. As discussed in Fig. 1, the password server 50 can store at least one user passer. The user password can be deposited by the user 10 to the password server 50 during a password depositing communication between the user 10 and the password server 50 (not shown). For example, during a user registration procedure the user 10 may also provide a user password 748 that can be securely (hashed, salted and/or peppered) in the password server 50.

In addition, the first password message 74 can comprise a validity date 743. The validity date can specify the time when the packet expires - i.e. the time during which the authorization (service grant 746) can be valid. This can allow for the system 1 to specify a time interval during which the user 10 can be authenticated at the secured object 30.

As discussed it can be advantageous that the exchange of the messages between the entities of the system can be done in a secured and encrypted manner. Thus, as indicated in Fig. 4 the first password message 74 can be encrypted with the private key 56 of the password server 50 (PS_PrivKey) and the public key 36 of the secured object 30 (SO_PubKey) specified by the secured object identity 746. The encryption of the first password message 74 with the use of the private key 56 of the password server 50 (PS_PrivKey) can allow the mobile device 20 and/or the secured object 30 to decrypt it with the public key 56 of the password server 50. This can ensure mobile device 20 and/or the secured object 30 that the first password message 74 was created by the password server 50 and not by any other third-party. This can further be facilitated if the public key 54 is signed by a trusted certificate authority. In some embodiments, the first password message 74 can be signed by with a password server public key 56 by the password server. Thus, the digital signature provided to the first password message 74 by the password server 50 can allow the secured object 30 (and optionally the mobile device 20) to not only verify that the message came from the password server 50, but can also verify that the data contained in the first password message was not corrupted.

In addition, the encryption of the data of the first password message 74 by the public key 34 of secured object 30 can ensure the secrecy of the data, since only secured object 30 can comprise secured object private key 56 that is required to decrypt the data in an asymmetric encryption scheme.

Further in Fig. 4 a second password message 76 can be sent by the mobile device 20 to the secured object 30. The second password message 76 can be sent from the mobile device 20 to secured object 30 during step 402 of the procedure discussed in Fig. 3a. The second password message 76 can comprise a message identity 761. The message identity 761 can be unique to an instance of a second password message 76 and/or can identify type of message - in this case a second password message 76.

The second password message 76 can further comprise a mobile device identity 762 and a secured object identity 764. The mobile device identity 762 can comprise the identity 22 of the mobile device 20 that created the second password message 76. The secured object identity 764 can comprise the identity 32 of a secured object 30 wherein the user 10 can request to use a service and/or execute a command.

Further, the second password message 76 can comprise a second user password 768. The second user password 768 can be entered by the user 10 during a second user password entry (refer to step 401 on Fig. 3a) and can allow the user 10 to prove its identity and/or can allow the secured object 30 to authenticate user 10.

As discussed it can be advantageous that the exchange of the messages between the entities of the system can be done in a secured and encrypted manner. Thus, the second password message 76 can be encrypted before sending it to the secured object 30. The encryption keys used can comprise the public key of the secured object 30. This can allow the maintenance of the secrecy of the data, as only the secured object 30 (that can comprise the secured object private key 36) can decrypt the data in an asymmetric encryption scheme. Further, to increase security - particularly for ensuring forward secrecy - the mobile device can generate a set of temporary keys that can be used only once for this message transfer. Thus, the mobile device can generate a temporary private key 536 (Temp_PrivKey) and a temporary public key 534 (Temp_PubKey) and can communicate the temporary public key 534 to the secured object 30. Then, the mobile device can additionally encrypt the second password message 76 using the temporary private key 536.

In some embodiments, the second password message 76 can be signed by with the mobile device private key 26 (not shown). Thus, the digital signature provided to the second password message 76 by the mobile device 20 can allow the secured object 30 to not only verify that the message came from the mobile device 20, but can also verify that the data contained in the second password message 76 was not corrupted.

In addition, at least one random number (e.g. a nonce) can be exchanged between the mobile device 20 and the secured object 30. For example, the mobile device 20 can generate a nonce (an arbitrary number that can only be used once) and can transmit it to the secured object 30. Similarly, the secured object 30 can generate another and can transmit it to the mobile device 20. Further, at least one of the generated nonces can be merged with the data of the second password message 76 before encrypting or signing the second password message 76. This can prevent replay attacks since the nonce can only be used once - i.e. for one communication session. A replay attack (also known as playback attack) is a form of network attack in which a valid data transmission is maliciously or fraudulently repeated or delayed. For example, an attacker can obtain the second password message 76 and the first password message 74 (e.g. by intercepting or becoming part of the connection between the mobile device 20 and the secured object 30) and can retransmit them at the secured object at a later time. This may allow the attacker to successfully authenticate at the secured object 30 as being the user 10. The use of the nonces (as they are unique per transaction) can avoid this type of attack. Thus, even if the attacker would obtain the messages and retransmit them at a later time, they would not be valid anymore as the nonce could be changed be either the secured object 30 or the mobile device 20. Note that though the attacker can obtain the first and the second password message 74 and 76, he/she cannot access the information contained in the packet without comprising the respective keys required for decryption.

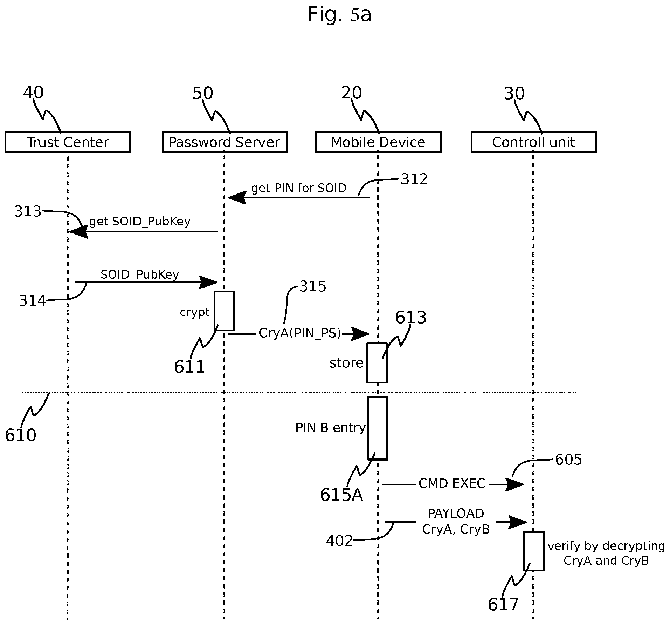

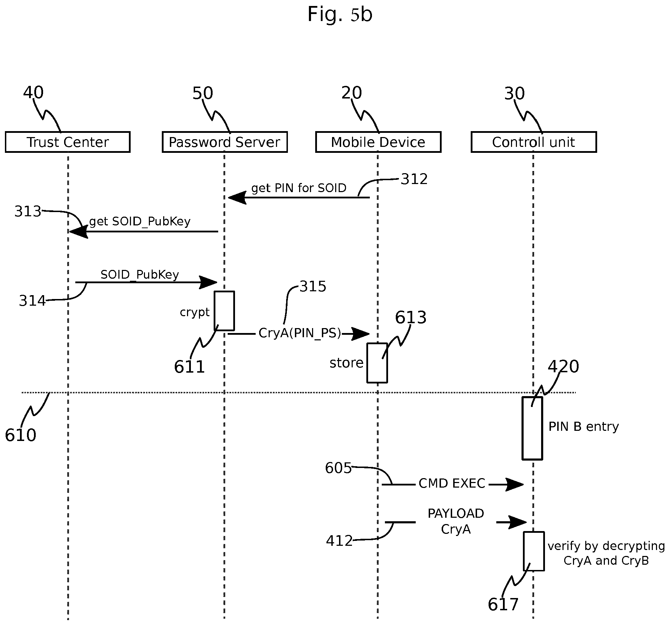

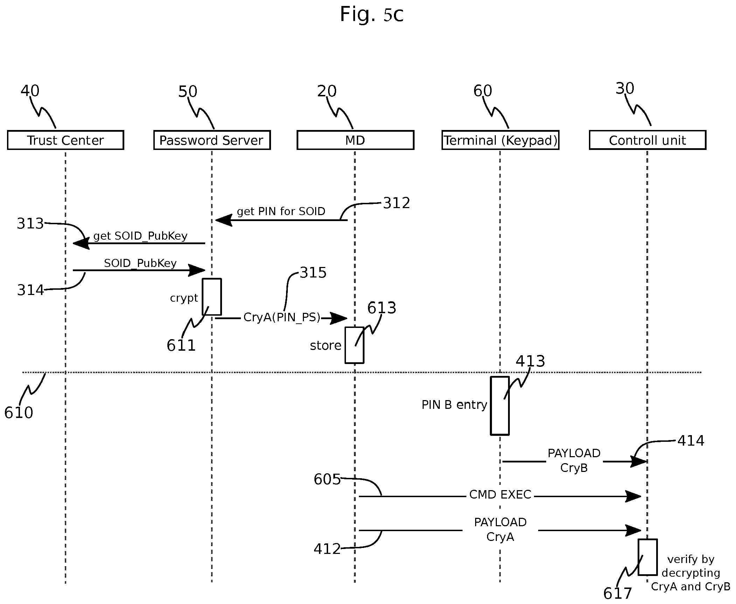

With reference to Figs. 5a, 5b and 5c different embodiments of an authentication method 2 configured for user authentication at an offline secured object will be described in more details.

**Fig. 5a** depicts a sequence diagram of a user authentication method 2 at a secured object 30 according to an embodiment of the present technology. The method 2 presented herein, provides a two-factor authentication procedure. The first authentication factor is provided to the mobile device 20 by the password server 50. The second authentication factor can include a user entering a user password. In the following paragraphs, more details regarding the authentication method 2 will be provided.

In step 312, the mobile device 20 can request a first user password 748 (refer to Fig. 4) from the password server 50. In Fig. 5a this step is labeled as *get PIN for SOID.* In this step the mobile device 20 can transmit to the password server a request message such as the password request message 72 discussed in Fig. 5. This communication can take place over a wireless, wired and/or optical communication network, such as: the Internet, cellular networks (e.g. GPRS, UMTS, LTE), a local area network (e.g. Ethernet, Wi-Fi) or the like. To ensure that the integrity of the data of the password request message 72 is preserved during the transmission of the data a digital signature may be calculated using the mobile device private key 26. To further ensure secrecy of the data (i.e. a non-intended party cannot have access on the data) the password request message 72 can be encrypted by the mobile device 20 with the password server public key 54. Note that the exchange of the public keys between the password server 50 and the mobile device 20 can be done during the initialization (i.e. set-up) of the communication between the password server 50 and the mobile device 20.

In step 313, the password server 50 can request a secured object public key 34 from the trust center 40. In Fig. 5a this step is labeled as *get SOID_PubKey.* During the request, the password server 50 can provide to the trust center 40 the secure object identity 32. Note that the password server 50 can get the secured object identity 32 from the password request message 72 (the SO_ID 724, refer to Fig. 4). As the trust center 40 can be configured to store a secure object public key 34 associated with the respective secured object identity 32, the trust center 40 can find the required secured object public key 34 based on the transmitted secured object identity 32 from the password server 50. Thus, in step 314 the trust center 40 can reply to the password server 50 by providing the required secured object public key 34.

The communication between the trust center 40 and the password server 50 can take place over a wireless, wired and/or optical communication network, such as: the Internet, cellular networks (e.g. GPRS, UMTS, LTE), a local area network (e.g. Ethernet, Wi-Fi) or the like. Asymmetric encryption and data signature based on the respective public-private key pairs of the trust center 40 and the password server 50 can ensure the secrecy and integrity of the communicated data between the two entities.

In a process 611, the password server 50 can encrypt the requested user password requested by the mobile device 20 in step 312. The password server 50 can generate a packet, such as the first password message 74 comprising among others the first user password 748 as discussed in relation to Fig. 4. During process 611 the password server 50 can sign the data of the first password message 74 with the secured object public key 34 (obtained in step 314 from the trust center 40) using an asymmetric encryption scheme. This can ensure that the first password message 74 can be decrypted (and thus the content can be accessed) only by the secured object 30 (as long as the secured object private key 36 is not obtained by another entity). In addition, during the crypt process 611 the password server can calculate a digital signature based on a metric of the data contained in the first password message 74 and the private key of the password server 50. This can allow the secured object 30 to verify that the data of the first password message 74 came from the password server 50 and the data of the first password message 74 were not corrupted.

In step 315, the password server 50 can transmit the encrypted first password message 74 to the mobile device 20 (that requested the first user password in step 312).

In a process 613, the mobile device 20 can store the encrypted first password message 74 in a memory location it can access. The mobile device 20 (hence the user 10 using the mobile device 20) can reuse the first password message 74 multiple times - as long as the validity date 743 of the first password message 74 (refer to Fig. 4) has not expired. Thus, steps 312 to 315 and processes 611 and 613 can be performed once per first password message 74, the user 10 can use the first password message 74 multiple times until the validity date 743 expires, and after the validity date 743 expires steps 312 to 315 and processes 611 and 613 can be performed again in order for user 10 to be able to authenticate at the secured object 30. In another embodiment, the first password message 74 can be used only once, thus the password server 50 can issue the packet every time the user 10 required user authentication at the secured object 30. That is, in the latter embodiment steps 312 to 315 and processes 611 and 613 can be performed every time a user authentication procedure at the secured object 30 can be required.

As steps 312 to 315 and processes 611 and 613 are the same for the three method embodiments presented in Fig. 5a, 5b and 5c, the detailed description of these steps and processes will be omitted when referring to Figs. 5b and 5c. The reader can refer to the upper description related to these steps and procedures.

Further, as discussed, the secured object 30 can be offline - i.e. it cannot be connected to a wide area network such as the internet or the cellular networks (e.g. GPRS, UMTS, LTE). However, as referred herein, the secured object 30 can participate in short-distance networks, such as Near-Field-Communication (NFC), Bluetooth®, infrared-based communication, sound-wave based communication, light wave based communication or the like. Thus, the secured object 30 can usually participate in short-distance communication network. Hence, the user 10 can approach the secured object 30; the subsequent steps 605, 402 and processes 615 and (not necessarily) 617 can be done while the user 10 and the mobile device 20 are near the secured object 30, such as, 1mm to 100m.

In a process 615 the user 10 enters the second user password 768 (refer to Fig. 4) in the mobile device 20. In Fig. 5a process 615 is also labeled as *PIN B entry.* The entry of the second user password 768 can be facilitated by the user interface 21 of the mobile device 20 (discussed in Fig. 1). For user 10 to authenticate to the secured object 30, it can be advantageous that the user 10 enters the same password as the first user password 748.

In a step 605 the command that can be executed at the secured object 30 (e.g. lock command, unlock command, engine start command, engine stop command, begin authentication procedure command, initiate a connection command) can be sent to the secured object 30 from the mobile device 20.

In a process 616 the mobile device 20 can generate a second password message 76 (refer to Fig. 4). During process 616 the mobile device 20 can encrypt the second password message 76 using the secured object public key 34, through an asymmetric encryption scheme. This can provide secrecy of the data as only the secured object 30 can decrypt the data - as long as the private key 36 of the secured object 30 is not obtained by another party.

In addition, the mobile device 20 may generate a pair of temporary encryption keys: a temporary public key 534 and a temporary private key 536, refer to Fig. 4. The mobile device 20 can transmit the temporary public key 534 to the secured object. The mobile device 20 can further encrypt the second password message 76 using the Temp_PrivKey. The temporary keys 534 and 536 can be deleted, after the completion of the communication, from both the mobile device 20 and the secured object 30. Using the temporary keys can provide the forward secrecy property. In cryptography, forward secrecy, is a property of secure communication protocols in which compromises of long-term keys does not compromise past session keys. In other words, even if the mobile device private key 26 and/or the secured object private key 36 and/or the security of the mobile device 20 and/or the secured object 30 are compromised all the past communication sessions can still not be decrypted because of the use of temporary set of keys 536 and 534.

In addition, at least one random number (e.g. nonce) can be exchanged between the mobile device 20 and the secured object 30. The at least one nonce can be merged with the data of the second password message 76 - before, during or after encryption. This can make the communication between the secured object 30 and the mobile device 20, while transmitting the second user password 768 from the mobile device 20 to the secured object 30, robust to replay attacks.

In addition, the mobile device 20 can sign the data using the mobile device private key 26.

In a step 402, the mobile device 20 can transmit the encrypted second password message 76 to the control unit 30. Furthermore, in this step the mobile device 20 can forward to the secured object 30 the first password message 74 that the mobile device 20 received from the password server 50 in step 315.

Thus, the secured object can receive two encrypted passwords: the first user password 748 that can be comprised in the first password message 74 and the second user password 768 that can be comprised in the second password message 76.

In a step 617, the secured object 30 can decrypt the first password message using the secured object private key 36 (which the secured object 30 comprises stored in a secured location in its memory) and the password server public key 54 (which the secured object can either get from a communication with the mobile device 20 or can have it stored in its memory during a set-up procedure).

Further in step 617, the secured object 30 can decrypt the second password message 76 using the secured object private key 36 and the temporary public key 534. If a digital signature is included by the mobile device 20, the secured object can decrypt the second password message 76 using the mobile device public key 24 (which the secured object 30 can obtain during a connection initialization with the mobile device 20). Having both of the passwords decrypted, the secured object can compare the first user password 748 with the second user password 768. The user 10 can be authenticated only if the two passwords match.

**Fig. 5b** depicts a sequence diagram of a user authentication method 2 at a secured object 30' according to an embodiment of the present technology. The authentication method 2 presented herein, provides a two-factor authentication procedure. The first authentication factor is provided to the mobile device 20 by the password server 50. The second authentication factor can include a user entering a user password. In the following paragraphs, more details regarding the authentication method 2 will be provided.

As discussed, since steps 312 to 315 and processes 611 and 613 are the same for the three method embodiments presented in Fig. 5a, 5b and 5c, the detailed description of these steps and processes will be omitted when referring to Figs. 5b and 5c. The reader can refer to the description of these steps and processes with correspondence to Fig. 5a.

In a step 420, the user 10 enters the second user password 768' (note that the second user password 768' does not have to be part of a second password message 76 as depicted in Fig. 4). In this embodiment, the secured object 30' can comprise a user interface 31 that can allow the user 10 to enter the second user password 768'. As the second user password can be directly entered in the secured object 30', using the user interface 31, the second user password 768' may not be encrypted.

In a step 605 the command that can be executed at the secured object 30 (e.g. lock command, unlock command, engine start command, engine stop command, begin authentication procedure command, initiate a connection command) can be sent to the secured object 30 from the mobile device 20.

In a step 412, the mobile device 20 can forward to the secured object 30 the first password message 74 that the mobile device 20 received from the password server 50 in step 315. Thus, the secured object can receive two passwords: the first user password 748 that can be comprised in the first password message 74 and the second user password 768' that can be entered by user 10 on the user interface 31 of the secured object 30'.

In a step 617, the secured object 30' can decrypt the first password message using the secured object private key 36 (which the secured object 30 comprises stored in a secured location in its memory) and the password server public key 54 (which the secured object can either get from a communication with the mobile device 20 or can have it stored in its memory during a set-up procedure).

The secured object 30' can compare the first user password 748 with the second user password 768'. The user 10 can be authenticated only if the two passwords match.

**Fig. 5c** depicts a sequence diagram of a user authentication method 2 at a secured object 30' according to an embodiment of the present technology. The method 2 presented herein, provides a two-factor authentication procedure. The first authentication factor is provided to the mobile device 20 by the password server 50. The second authentication factor can include a user entering a user password. In the following paragraphs, more details regarding the method 2 will be provided.

As discussed, since steps 312 to 315 and processes 611 and 613 are the same for the three method embodiments presented in Fig. 5a, 5b and 5c, the detailed description of these steps and processes will be omitted when referring to Figs. 5b and 5c. The reader can refer to the description of these steps and processes with correspondence to Fig. 5a.

In a process 413 the user 10 enters the second user password 768 (refer to Fig. 4) in the keypad terminal 60. In Fig. 5c process 615 is also labeled as *PIN B entry.* The entry of the second user password 768 can be facilitated by a keypad or keyboard of the keypad terminal 60. For user 10 to authenticate to the secured object 30, it can be advantageous that the user 10 enters the same password as the first user password 748.

In a process 630, the keypad terminal can generate and encrypt a second password message 76. The process of encryption 630 is similar to the one done by the mobile device in process 616 in Fig. 5a. It can be obvious, that the respective pair of public-private keys of the keypad terminal 60 is used for the encryption of the second password message 76, instead of the mobile device public-private pair of keys as done in process 616. As well as, in process 630 it is the keypad terminal 60 that generates the pair of temporary keys used to provide forward secrecy. As process 630 can be obvious in light of process 616 a detailed description of process 630 is omitted.

In a step 414, the keypad terminal 60 can transmit the encrypted second password message 76 to the control unit 30.

In a step 605 the command that can be executed at the secured object 30 (e.g. lock command, unlock command, engine start command, engine stop command, begin authentication procedure command, initiate a connection command) can be sent to the secured object 30 from the mobile device 20.

In a step 412, the mobile device 20 can forward to the secured object 30 the first password message 74 that the mobile device 20 received from the password server 50 in step 315.

Thus, the secured object can receive two encrypted passwords: the first user password 748 that can be comprised in the first password message 74 and the second user password 768 that can be comprised in the second password message 76.

In a step 617, the secured object 30 can decrypt the first password message using the secured object private key 36 (which the secured object 30 comprises stored in a secured location in its memory) and the password server public key 54 (which the secured object can either get from a communication with the mobile device 20 or can have it stored in its memory during a set-up procedure).

Further in step 617, the secured object 30 can decrypt the second password message 76 using the secured object private key 36 and the temporary public key 534. If a digital signature is included by the mobile device 20, the secured object can decrypt the second password message 76 using the mobile device public key 24 (which the secured object 30 can obtain during a connection initialization with the mobile device 20).

Having both of the passwords decrypted, the secured object can compare the first user password 748 with the second user password 768. The user 10 can be authenticated only if the two passwords match.

## Claims

1. A system (1) configured for user authentication at a secured object (30) comprising:
a mobile device (20), a secured object (30), a user password entry device and a password server (50);
and wherein
the password server (50) is configured to transfer a first user password (748) to the secured object (30) via the mobile device (20); and
the user password entry device is configured to allow the user to enter a second user password (768) and to transfer the second user password to the secured object (30); and
the secured object (30) is configured to authenticate the user based on a comparison of the first user password (748) and the second user password (768).

2. The system (1) according to the preceding claim, wherein the mobile device (20) comprises at least one, preferably all, of the following:
mobile device identity (22) and
at least one cryptographic key, preferably a pair of cryptographic keys, such as, a mobile device public key (24) and a mobile device private key (26).

3. The system (1) according to any of the preceding claims, wherein the secured object (30) is at least one of the following: electronic lock, a vehicle, an electronic lock in the vehicle and/or a vehicle engine start/stop controller.

4. The system (1) according to any of the preceding claims, wherein the mobile device (20) is configured to send a password request message (72) to the password server (50).

5. The system (1) according to any of the preceding claims, wherein the password server (50) is configured to generate a first password message (74) and transmits it to the mobile device (20) and wherein the first password message (74) comprises the first user password (748).

6. The system (1) according to the preceding claim, wherein the mobile device (20) is configured to transmit the first password message (74) to the secured object (30).

7. The system (1) according to any of the preceding claims, wherein the system is configured to allow the user to facilitate authentication at the secured object (30) by entering the second user password (768) on the mobile device (20) and wherein the mobile device (20) comprises the user password entry device.

8. The system (1) according to any of the preceding claims, wherein the mobile device (20) is configured to send a second password message (76) to the secured object (30) and wherein the second password message (76) comprises the second user password (768) and/or
wherein the second password message (76) comprises at least one of: a second password message identity (761), a mobile device identity (762) and a secured object identity (764).

9. The system (1) according to any of the preceding claims, wherein at least one nonce is transmitted between the mobile device (20) and the secured object (30) and wherein the at least one nonce transmitted between the mobile device (20) and the secured object (30) is used to encrypt the second password message (76).

10. The system (1) according to any of the preceding claims, wherein
a. the system further comprises a keypad terminal (60) and wherein the system is configured to allow the user to facilitate authentication at the secured object (30) by entering the second user password (768) on the keypad terminal (60), wherein the keypad terminal (60) comprises the user password entry device and wherein the keypad terminal (60) is configured to transfer the second user password (768) to the secured object (30), and/or
b. wherein at least one nonce is transmitted between the keypad terminal (60) and the secured object (30) and wherein the at least one nonce transmitted between the keypad terminal (60) and the secured object (30) is used to encrypt the second password message (76).

11. The system (1) according to any of the preceding claims, wherein
a. the secured object (30) comprises a user interface (31) and wherein the system is configured to allow the user to facilitate authentication at the secured object (30) by entering the second user password (768) on the user interface (31) of the secured object (30) wherein the user interface (31) comprises the user password entry device; and/or
b. wherein the secured object (30) is configured to compare the first user password (748) with the second user password (768) and wherein the system is configured to allow the user to be authenticated by the secured object (30) if the first user password (748) is the same as the second user password (768).

12. The system (1) according to any of the preceding claims, wherein if the user is authenticated by the secured object (30) at least one of the following holds true:
the secured object (30) is configured to execute a command, such as an unlock or lock command,
the user is allowed to use a service of the secured object (30) and/or
the mobile device (20) and the secured object (30) are configured to communicate through NFC, Bluetooth®, Infrared-based and/or socket-based communication protocols.

13. An authentication method (2) of a user at a secured object (30), based on a comparison of a first user password (748) and a second user password (768) wherein
the first user password (748) is transferred from a password server (50) to the secured object (30) via a mobile device (20); and
the second password is transferred from the user to the secured object (30) via a mobile device (20) or keypad terminal (60) or a direct entry of the second user password (768) to the secured object (30) and/or
the mobile device (20) requests a first user password (748) from the password server (50) and wherein the password server (50) transmits the first user password (748) to the mobile device (20); and/or
wherein the user enters the second user password (768) on at least one of: the mobile device (20) and keypad terminal (60) and/or
the secured object (30) comprises a user interface (31) and wherein the user facilitates authentication at the secured object (30) by entering the second user password (768) on the user interface (31) of the secured object (30) and/or
the secured object (30) compares the first user password (748) with the second user password (768) and wherein the user is authenticated by the secured object (30) if the first user password (748) is the same as the second user password (768) and/or
the secured object (30) executes a command, such as an unlock or lock command, if user is authenticated by the secured object (30) and/or the user is allowed to use a service of the secured object (30) if the user is authenticated by the secured object (30) and/or

14. An authentication method (2) of a user at a secured object (30) according to the preceding claim, wherein at least one of the transfers, preferably all of the transfers, of the first user password (748) and second user password (768) are securely performed based on the Diffie-Hellman (DH) protocol or the Elliptic-Curve Diffie-Hellman (ECDH) protocol.

15. Use of the system (1) according to any of the preceding claims 1 to 12 and/or the authentication method (2) according to any of the preceding claims 13 to 14 in at least one of:
a. a car and/or a bike sharing service;
b. a machine and/or device sharing service;
c. an apartment sharing service.
